# EUROPEAN PATENT APPLICATION

(11) **EP 4 614 949 A1**
(43) Date of publication of application: **10.09.2025**
(21) Application number: 22967932.9
(22) Date of filing: 07.12.2022
(51) Int. Cl.: H04L 67/148, G01S 13/02, H04L 67/141, H04W 76/20, H04W 84/18

(54) **METHOD AND APPARATUS FOR MANAGING ULTRA BROADBAND COMMUNICATION SESSION**

(71) Applicant: Samsung Electronics Co., Ltd., Suwon-si, Gyeonggi-do 16677 (KR)
(72) Inventor: RYU, Youngsun, Suwon-si Gyeonggi-do 16677 (KR); KIM, Sungdong, Suwon-si Gyeonggi-do 16677 (KR); AN, Kisoo, Suwon-si Gyeonggi-do 16677 (KR); LIM, Yeonju, Suwon-si Gyeonggi-do 16677 (KR)
(74) Representative: HGF
(86) International application number: PCT/KR2022/019848
(87) International publication number: WO 2024/122674

(57) **Abstract**

The present disclosure provides a method for UWB session management. A method by which a first electronic device performs UWB communication, according to one embodiment of the present disclosure, may comprise the steps of: performing UWB ranging with a user device through a UWB session; determining, on the basis of the UWB ranging, whether movement of the UWB session to a second electronic device registered in the first electronic device is necessary; and, if it is determined that the movement of the UWB session to the second electronic device is necessary, transmitting UWB connection information about the second electronic device, wherein the UWB connection information can be used for connecting a UWB session between the user device and the second electronic device.

## Description

### [Technical Field]

The disclosure relates to ultra-wideband (UWB) communication and, more specifically, to a method and a device for managing a UWB session.

### [Background Art]

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has also emerged. Technology elements, such as "sensing technology", "wired/wireless communication and network infrastructure", "service interface technology", and "Security technology" have been demanded for IoT implementation. A sensor network, a Machine-to-Machine (M2M) communication, Machine Type Communication (MTC), and so forth have been recently researched.

Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

With the advance of wireless communication systems, various services can be provided, and accordingly there is a need for ways to effectively provide these services. For example, a ranging technology for measuring the distance between electronic devices by using an ultra-wide band (UWB) may be used.

### [Detailed Description of the Invention]

### [Technical Problem]

The disclosure provides a method for efficiently managing a UWB session in a multi-connection environment.

### [Technical Solution]

A method of a first electronic device performing UWB communication, according to an aspect of the disclosure, may include: performing UWB ranging with a user device through a UWB session; determining, based on the UWB ranging, whether a movement of the UWB session to a second electronic device registered with the first electronic device is necessary; and when it is determined that the movement of the UWB session to the second electronic device is necessary, transmitting UWB connection information regarding the second electronic device, wherein the UWB connection information is used to connect a UWB session between the user device and the second electronic device.

A method of a user device performing UWB communication, according to another aspect of the disclosure, may include: performing UWB ranging with a first electronic device through a UWB session; receiving, from the first electronic device, location information, UWB connection information, and identification information regarding at least one other electronic device registered with the first electronic device; determining, based on the UWB ranging, whether a movement of the UWB session to a second electronic device, which is one of the at least one other electronic device, is necessary; and when it is determined that the movement of the UWB session to the second electronic device is necessary, transmitting an advertisement message including first information for UWB triggering of the second electronic device.

### [Brief Description of Drawings]

FIG. 1 illustrates an exemplary architecture of a UWB device according to an embodiment of the disclosure.
FIG. 2A illustrates an exemplary configuration of a communication system including an electronic device supporting a UWB-based service according to an embodiment of the disclosure.
FIG. 2B illustrates an exemplary configuration of a communication system including an electronic device supporting a UWB-based service according to an embodiment of the disclosure.
FIG. 3A illustrates a structure of a UWB MAC frame according to an embodiment of the disclosure.
FIG. 3B illustrates a structure of a UWB PHY packet according to an embodiment of the disclosure.
FIG. 4A illustrates an example of a ranging block structure according to an embodiment of the disclosure.
FIG. 4B illustrates an example of a ranging round according to an embodiment of the disclosure.
FIG. 5 illustrates various examples of a UWB ranging method according to an embodiment of the disclosure.
FIG. 6 illustrates an example of a procedure for establishing a UWB session according to an embodiment of the disclosure.
FIG. 7 illustrates an example of a procedure for establishing a UWB session and providing a service through the UWB session according to an embodiment of the disclosure.
FIG. 8 illustrates an example of a procedure for establishing a UWB session and providing a service through the UWB session according to an embodiment of the disclosure.
FIG. 9 illustrates an example of multiple connections according to an embodiment of the disclosure.
FIG. 10 illustrates an example of a UWB session state according to an embodiment of the disclosure.
FIG. 11 illustrates a transition diagram for a UWB connection state according to an embodiment of the disclosure.
FIG. 12 illustrates an example of a method for managing the number of UWB sessions by using a UWB session pause/resumption procedure according to an embodiment of the disclosure.
FIG. 13 illustrates an example of multiple connections according to an embodiment of the disclosure.
FIG. 14 illustrates an example of a procedure for moving a UWB session connection according to an embodiment of the disclosure.
FIG. 15 illustrates an example of a BLE advertisement message according to an embodiment of the disclosure.
FIG. 16 may illustrate an example of a procedure for registering a kiosk according to an embodiment of the disclosure.
FIG. 17A illustrates an example of a procedure for moving a UWB session connection according to an embodiment of the disclosure.
FIG. 17B illustrates another example of a procedure for moving a UWB session connection according to an embodiment of the disclosure.
FIG. 17C illustrates yet another example of a procedure for moving a UWB session connection according to an embodiment of the disclosure.
FIG. 18 illustrates another example of multiple connections according to an embodiment of the disclosure.
FIG. 19A illustrates an example of a procedure for moving a UWB session connection according to an embodiment of the disclosure.
FIG. 19B illustrates an example of a procedure for moving a UWB session connection according to an embodiment of the disclosure.
FIG. 19C illustrates another example of a procedure for moving a UWB session connection according to an embodiment of the disclosure.
FIG. 20 illustrates an example of multiple connections according to an embodiment of the disclosure.
FIG. 21 illustrates an example of a UWB advertisement message according to an embodiment of the disclosure.
FIG. 22A illustrates an example of a UWB session connection procedure using a UWB advertisement message according to an embodiment of the disclosure.
FIG. 22B is a flowchart illustrating a UWB session connection procedure using a UWB advertisement message according to an embodiment of the disclosure.
FIG. 23A illustrates another example of a UWB session connection procedure using a UWB advertisement message according to an embodiment of the disclosure.
FIG. 23B is a flowchart illustrating a UWB session connection procedure using a UWB advertisement message according to an embodiment of the disclosure.
FIG. 24 illustrates a method for moving a UWB session connection by a first electronic device according to an embodiment of the disclosure.
FIG. 25 illustrates a method for moving a UWB session connection by a user device according to an embodiment of the disclosure.
FIG. 26 illustrates a configuration of a UWB device according to an embodiment of the disclosure.

### [Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, according to some embodiments, the "unit" may include one or more processors.

As used herein, the term "terminal" or "device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various example of the terminal may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and reproduction home appliance having a wireless communication function, an Internet home appliance capable of wireless Internet access and browsing, and portable units or terminals having integrated combinations of the above functions. Furthermore, the terminal may include a machine to machine (M2M) terminal, and a machine type communication (MTC) terminal/device, but is not limited thereto. In the specification, the terminal may also be referred to as an electronic device or simply as a device.

Hereinafter, the operation principle of the disclosure will be described in detail in conjunction with the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Hereinafter, embodiments of the disclosure will be described in detail in conjunction with the accompanying drawings. In the following description of embodiments of the disclosure, a communication system using a UWB will be described by way of example, but the embodiments of the disclosure may be applied to other communication systems having similar technical backgrounds or characteristics. Examples of such communication systems may include communication systems Bluetooth or ZigBee. Therefore, based on determinations by those skilled in the art, the embodiments of the disclosure may be applied to other communication systems through some modifications without significantly departing from the scope of the disclosure.

Also, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In general, wireless sensor network technology is largely classified into wireless local area network (WLAN) technology and wireless personal area network (WPAN) technology according to a recognition distance. In this case, WLAN is a technology based on IEEE 802.11 and is a technology capable of accessing a backbone network within a radius of about 100 m. Further, WPAN is a technology based on IEEE 802.15 and includes Bluetooth, ZigBee, ultra-wideband (UWB), and the like. A wireless network in which such wireless network technology is implemented may include a plurality of electronic devices.

According to definitions by the Federal Communications Commission (FCC), UWB may refer to a wireless communication technology using a bandwidth of 500 MHz or higher or a bandwidth of which the center frequency corresponds to 20% or more thereof. UWB may refer a band itself to which UWB communication is applied. UWB may enable secure and accurate ranging between devices. Thus, UWB enables relative position estimation based on a distance between two devices or accurate position estimation of a device based on a distance from fixed devices (with known locations).

Specific terms used in the following description are provided to help understanding the disclosure, and the use of such specific terms may be changed into other forms without departing from the technical spirit of the disclosure.

An "application dedicated file (ADF)" may be, for example, a data structure within an application data structure that may host an application or application specific data.

An "application protocol data unit (APDU)" may be a command and response used when communicating with an application data structure within a UWB device.

"Application specific data" may be, for example, a file structure having a root level and an application level and including UWB controlee information and UWB session data required for a UWB session.

A "controller" may be a ranging device that defines and controls a ranging control message (RCM) (or control message). The controller may define and control ranging features by transmitting a control message.

A "controlee" may be a ranging device using a ranging parameter in an RCM (or control message) received from a controller. The controlee may use ranging features such as those configured by the controller through a control message.

A "dynamic scrambled timestamp sequence (STS) mode" may be an operation mode in which an STS is not repeated during a ranging session, unlike a "static STS". In this mode, the STS may be managed by a ranging device, and a ranging session key that generates the STS may be managed by a secure component.

An "applet" may be, for example, an applet executed on a secure component including UWB parameters and service data. The applet may be a FiRa applet.

A "ranging device" may be a device capable of performing UWB ranging. In the disclosure, the ranging device may be an enhanced ranging device (ERDEV) defined in IEEE 802.15.4z or a FiRa device. The ranging device may be referred to as a UWB device.

A "UWB-enabled application" may be an application for a UWB service. For example, the UWB-enabled application may be an application using a framework API for configuring an OOB connector, a secure service, and/or a UWB service for a UWB session. The "UWB-enabled application" may be simply referred to as an application or a UWB application. The UWB-enabled application may be a FiRa-enabled application.

A "framework" may be a component for providing access to a profile, an individual UWB configuration, and/or a notification. The framework may be, for example, a collection of logical software components including a profile manager, an OOB connector, a secure service, and/or a UWB service. The framework may be a FiRa framework.

An "OOB connector" may be a software component for establishing an out-of-band (OOB) connection (for example, a BLE connection) between ranging devices. The OOB connector may be a FiRa OOB connector.

A "profile" may be a predefined set of UWB and OOB configuration parameters. The profile may be a FiRa profile.

A "profile manager" may be a software component that implements a profile available on a ranging device. The profile manager may be a FiRa profile manager.

A "service" may correspond to implementation of a use case that provides a service to an end-user.

A "smart ranging device" may be a ranging device capable of implementing an optional framework API. The smart ranging device may be a FiRa smart device.

A "global dedicated file (GDF)" may be a root level of application specific data including data required to establish a USB session.

A "framework API" may be an API used by a UWB-enabled application to communicate with a framework.

An "initiator" may be a ranging device that initiates a ranging exchange. The initiator may initiate a ranging exchange by transmitting a first RFRAME (ranging exchange message).

An "object identifier (OID)" may be an identifier of an ADF in an application data structure.

An "out-of-band (OOB)" may be data communication that does not use UWB as an underlying wireless technology.

A "ranging data set (RDS)" may be data (for example, a UWB session key, a session ID, etc.) required to establish a UWB session where confidentiality, authenticity, and integrity need to be protected.

A "responder" may be a ranging device that responds to an initiator in a ranging exchange. The responder may respond to a ranging exchange message received from the initiator.

An "STS" may be a ciphered sequence for increasing integrity and accuracy of ranging measurement timestamps. The STS may be generated from a ranging session key.

A "secure channel" may be a data channel that prevents overhearing and tampering.

A "Secure component" may be, for example, an entity (for example, a secure element (SE) or a trusted execution environment (TEE)) having a defined security level and interfacing with a UWBS for the purpose of providing an RDS to the UWBS when a dynamic STS is used.

An "SE" may be a tamper-resistant secure hardware component that may be used as a secure component in a ranging device.

A "secure ranging" may be ranging based on an STS generated through a strong encryption operation.

A "secure service" may be a software component for interfacing with a secure component such as a secure element or a TEE.

A "service applet" may be an applet on a secure component that handles a service-specific transaction.

"Service data" may be data defined by a service provider, which needs to be transferred between two ranging devices to implement a service.

A "service provider" may be an entity that defines and provides hardware and software required to provide a specific service to an end-user.

A "static STS mode" is an operation mode in which an STS is repeated during a session, and does not need to be managed by a secure component.

A "secure UWB service (SUS) applet" may be an applet on an SE communicating with an applet to retrieve data required to enable a secure UWB session with another ranging device. In addition, the SUS applet may transfer corresponding data (information) to a UWBS.

A "UWB service" may be a software component that provides access to a UWBS.

A "UWB session" may refer to a period from when a controller and a controlee start communicating through UWB until they stop communicating. The UWB session may include ranging, data transfer, or both ranging and data transfer.

A "UWB session ID" may be an ID (for example, a 32-bit integer) that identifies a UWB session and is shared between a controller and a controlee.

A "UWB session key" may be a key used to protect a UWB session. The UWB session key may be used to generate an STS. The UWB session key may be a UWB ranging session key (URSK), and may be simply referred to as a session key.

A "UWB subsystem (UWBS)" may be a hardware component that implements UWB PHY and MAC layers (specs). The UWBS may have an interface for a framework, and an interface for a secure component for searching for an RDS.

"Scheduled-based ranging" may be used for a ranging round in which controlees are scheduled by a controller to transmit ranging frames (RFRAMEs) and/or measurement reports in different ranging slots. The scheduling-based ranging may also be referred to as time-scheduled ranging. A scheduling mode in which the scheduling-based ranging is used may be referred to as a time-scheduled mode. For example, time-scheduled two way ranging may be used as scheduling-based ranging.

"Contention-based ranging" may be used when a controller does not know MAC addresses of controlees participating in a UWB session (ranging session). In the contention-based ranging, the controller may be an initiator, and may perform ranging with other unknown UWB devices. A scheduling mode in which the contention-based ranging is used may be referred to as a contention-based mode.

The contention-based ranging may be used for a ranging round in which a controller determines the size of a contention access period (CAP) and notifies of the CAP size through a ranging control message. The CAP may be referred to as a contention window or a contention window period.

In the contention-based mode (e.g., contention-based two way ranging), a UWB device may operate as a controller and an initiator, and in this case, a ranging control phase (RCP) and a ranging initiation phase (RIP) may be merged into one phase (e.g., RIP). Through allocation of the CAP size in a ranging phase (RP), a CAP period for a responder(s) participating in the corresponding ranging round may be determined in units of ranging slots. Each responder may randomly determine one slot in a CAP to transmit a ranging response message (RRM). Messages used in the contention-based ranging may use SP1 as an RFRAME configuration.

"Hybrid ranging" may be used when there is a known controlee and an unknown controlee. As described above, the known controlee may be a controlee, the MAC address of which is known to a controller, and the unknown controlee may be a controlee, the MAC address of which is unknown to the controller. The hybrid ranging may be referred to as hybrid-based ranging. A scheduling mode in which the hybrid ranging is used may be referred to as a hybrid-based mode.

In the hybrid-based mode, the controller may perform ranging with the known controlee in the scheduling-based mode, and perform ranging with the unknown controlee in the contention-based mode.

In the hybrid-based mode, a ranging round may include a ranging control phase (RCP) and a ranging phase (RP). The RP may include a contention free period (CFP) for scheduling-based ranging (access) and a contention access period (CAP) for contention-based ranging (access). A control message (ranging control message) used in the RCP in the hybrid-based mode may be referred to as a ranging management message (RMM).

A "UWB message" may be a message including a payload IE transmitted by a UWB device (for example, an ERDEV). The UWB message may be a message such as a ranging initiation message (RIM), a ranging response message (RRM), a ranging final message (RFM), a control message (CM), a measurement report message (MRM), a ranging result report message (RRRM), a control update message (CUM), or a one-way ranging (OWR) message. If necessary, a plurality of messages may be merged into one message.

A "payload IE" may be simply referred to as a payload information element, and may be included in a MAC payload of a UWB MAC frame defined in IEEE 802.15.4/4z. The MAC payload may include a plurality of payload IEs.

A "data message IE (data message payload IE)" may be an additional payload IE for transmitting application data. The application data may be data transferred in an application or a framework in an upper layer of a UWB MAC layer.

The data message IE may be used in a two-way ranging (TWR) procedure. In this case, a ranging message (UWB message) may include at least one or both of the payload IE for ranging and the data message IE for transmitting application data. For example, the data message IE may be included as a part of a payload IE of a MAC payload of a ranging initiation message (RIM), a ranging response message (RRM), a ranging final message (RFM), a measurement report message (MRM), and a ranging result report message (RRRM) for ranging and transferred.

The data message IE may also be used in a one-way ranging (OWR) procedure for angle of arrival (AoA) measurement. In this case, an AoA measurement message may include at least one payload IE for AoA measurement and at least one data message IE for transmitting application data. For example, the data message IE may be included as a part of a payload IE of a MAC payload of the AoA measurement message and transferred.

"OWR" may be a ranging scheme that uses messages transmitted in one direction between a ranging device and one or more other ranging devices. The OWR may be used to measure a time difference of arrival (TDoA). Additionally, the OWR may be used to measure an AoA at a receiving side rather than measuring a TDoA (one-way ranging for AoA measurement ranging method). In this case, a pair of one advertiser and one observer may be used. The OWR for measuring an AoA allows an observer to receive an OWR message from an advertiser and measure an AoA to determine an intention, action, or motion of the observer's user. For example, the user's intention to control a specific advertiser may be verified by results of AoA measurements for OWR messages from the advertiser. In this disclosure, the OWR may be referred to as a UWB OWR.

An "advertiser" is a ranging device that transmits an AoA measurement message. The advertiser may include application data (application payload data) as a part of a MAC payload of an AoA measurement message by using a data message IE. The application data may be configured by an upper layer. In the disclosure, the advertiser may be referred to as an advertiser device or a UWB advertiser device. In the disclosure, the AoA measurement message may also be referred to as an OWB message for AoA measurement, a UWB OWR message for AoA measurement, a UWB advertisement message, an advertisement message, etc.

An "observer" is a ranging device that receives an AoA measurement message and measures an AoA for each message. The observer may transmit the measured AoA to an upper layer. The observer may transmit application data to the upper layer when the application data is included in a MAC payload of the AoA measurement message. In the disclosure, the observer may be referred to as an observer device or a UWB observer device.

"TWR" may be a ranging scheme capable of estimating a relative distance between two devices by measuring a time of flight (ToF) through the exchange of ranging messages between the two devices. The TWR scheme may be one of double-sided two-way ranging (DS-TWR) and single-sided two-way ranging (SS-TWR). The SS-TWR may be a procedure for performing ranging through one round-trip time measurement. For example, the SS-TWR may include a transmission operation of an RIM from an initiator to a responder, and a transmission operation of an RRM from a responder to an initiator. The DS-TWR may be a procedure for performing ranging through two round-trip time measurements. For example, the DS-TWR may include a transmission operation of an RIM from an initiator to a responder, a transmission operation of an RRM from a responder to an initiator, and a transmission operation of an RFM from an initiator to a responder. Through such a ranging exchange (ranging message exchange), a time of flight (ToF) may be calculated, and a distance between two devices may be estimated. Meanwhile, in a TWR process, measured AoA information (for example, an AoA azimuth result and an AoA elevation result) may be transmitted to another ranging device through an RRM or other messages. In the disclosure, the TWR may be referred to as UWB TWR.

"DL-TDoA" may be called downlink time difference of arrival (DL-TDoA) or reverse TDoA, and its default operation may be for a user device (tag device) to overhear (or receive) a message of an anchor device while a plurality of anchor devices broadcast messages or exchange messages with each other. The DL-TDoA may be classified as a type of one way ranging like uplink TDoA. A user device performing a DL-TDoA operation may overhear messages transmitted by two anchor devices, and calculate a TDoA proportional to the difference in distance between each anchor device and the user device. The user device may use a TDoA with multiple pairs of anchor devices to calculate relative distances to the anchor devices and use the calculated distances for positioning. For example, the operation of an anchor device for DL-TDoA may be similar to that of DS-TWR defined in IEEE 802.15.4z, and may further include other useful time information to enable the user device to calculate a TDoA. The DL-TDoA may be referred to as DL-TDoA localization.

"Uplink TDoA (UL-TDoA)" may be a ranging scheme in which a UWB tag transmits or broadcasts a ranging message, at least one UWB anchor obtains a TDoA, based on the received ranging message, and estimates the location of the UWB tag, based on the TDoA.

An "AoA" is an angle of arrival of a received signal and may be expressed as relative angles such as AoA azimuth and AoA elevation. For example, it may be assumed that a measurement device is an electronic device having a display, the Y-axis is a vertical display axis of the electronic device, the X-axis is a horizontal display axis of the electronic device, and the Z-axis is orthogonal to the display of the electronic device. In this case, an AoA azimuth angle may be a relative angle between an input signal projected on the XZ plane and the Z-axis, and an AoA elevation angle may be a relative angle between the input signal and the XZ plane.

In the case of the TWR, a controller (and/or initiator) may measure an AoA azimuth for an RRM and transmit the measured AoA azimuth to an upper layer through a UCI notification message. A controlee (and/or responder) may measure an AoA azimuth for an RIM message and transmit the measured AoA azimuth through an RRM.

In the case of the TWR, the controller (and/or initiator) may measure an AoA elevation for an RRM and transmit the measured AoA elevation to an upper layer through a UCI notification message. The controlee (and/or responder) may measure an AoA elevation for an RIM message and transmit the measured AoA elevation through an RRM.

In the case of the OWR, an observer may measure an AoA azimuth and an AoA elevation for an AoA measurement message.

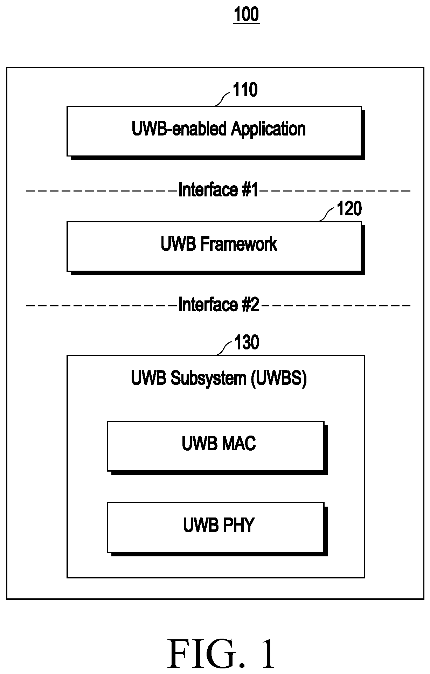

FIG. 1 illustrates an exemplary architecture of a UWB device according to an embodiment of the disclosure.

A UWB device 100 may be an electronic device supporting UWB communication. The UWB device 100 may be, for example, a ranging device supporting UWB ranging. In an embodiment, the ranging device may be an enhanced ranging device (ERDEV) defined in IEEE 802.15.4z or a FiRa device.

In the embodiment of FIG. 1, the UWB device 100 may interact with another UWB device through a UWB session.

In addition, the UWB device 100 may implement a first interface (Interface #1) which is an interface between a UWB-enabled application 110 and a UWB framework 120, and the first interface enables the UWB-enabled application 110 on the UWB device 100 to use UWB capabilities of the UWB device 100 in a predetermined scheme. In an embodiment, the first interface may be a framework API or a proprietary interface, but is not limited thereto.

In addition, the UWB device 100 may implement a second interface (Interface #2) which is an interface between the UWB framework 110 and a UWB subsystem (UWBS) 130. In an embodiment, the second interface may be a UWB command interface (UCI) or a proprietary interface, but is not limited thereto.

Referring to FIG. 1, the UWB device 100 may include a UWB-enabled application 110, a framework (UWB framework) 120, and/or a UWBS 130 including a UWB MAC layer and a UWB physical layer. According to some embodiments, some entities may not be included in the UWB device, or additional entities (for example, a security layer) may be further included.

The UWB-enabled application 110 may trigger establishment of a UWB session by the UWBS 130 through the first interface. In addition, the UWB-enabled application 110 may use one of previously defined profiles. The UWB-enabled Application 110 may use the first interface to handle related events, such as service discovery, ranging notifications, and/or error conditions.

The framework 120 may provide access to a profile, an individual UWB configuration, and/or a notification. The framework 120 may support at least one of a function for UWB ranging and transaction execution, a function of providing an interface to an application and the UWBS 130, or a function of estimating the location of the device 100. The framework 120 may be a set of software components. As described above, the UWB-enabled application 110 may interface with the framework 120 through the first interface, and the framework 120 may interface with the UWBS 130 through the second interface.

Meanwhile, in the disclosure, the UWB-enabled application 110 and/or the framework 120 may be implemented by an application processor (AP) (or processor). Therefore, in the disclosure, the operation of the UWB-enabled application 110 and/or the framework 120 may be understood as being performed by an AP (or processor). In this disclosure, the framework may be referred to as an AP or a processor.

The UWBS 130 may be a hardware component including a UWB MAC layer and a UWB physical layer. The UWBS 130 may perform UWB session management and may communicate with a UWBS of another UWB device. The UWBS 130 may interface with the framework 120 through the second interface and may obtain security data from a secure component. In an embodiment, the framework (or, application processor) 120 may transmit a command to the UWBS 130 through UCI, and the UWBS 130 may transmit a response to the command to the framework 120. The UWBS 130 may also transmit a notification to the framework 120 through the UCI.

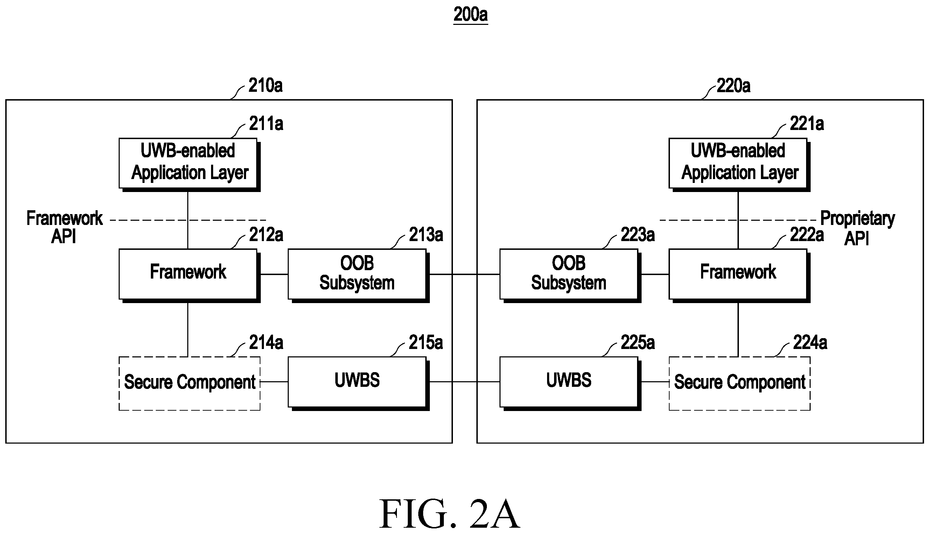

FIG. 2A illustrates an exemplary configuration of a communication system including an electronic device supporting a UWB-based service according to an embodiment of the disclosure.

Referring to FIG. 2A, a communication system 200a includes a first electronic device 210a and a second electronic device 220a.

As an embodiment, the first electronic device 210a and the second electronic device 220a may be, for example, the UWB device of FIG. 1 or an electronic device including the UWB device of FIG. 1. For example, the first electronic device 210a may be, for example, a smart ranging device or a ranging device, and the second electronic device 220a may be, for example, a ranging device or a ranging device. As an embodiment, the smart ranging device or ranging device may be an enhanced ranging device (ERDEV) defined in IEEE 802.15.4z or a FiRa device. In FIG. 2A, the first electronic device may be referred to as a first UWB device, and the second electronic device may be referred to as a second UWB device.

The first electronic device 210a may host one or more UWB-enabled applications which may be installed by a user (e.g., a mobile phone). This may be based on a framework API. The second electronic device 220a does not provide a framework API and, for example, may use a proprietary interface to implement a specific UWB-enabled application provided only by a manufacturer. Meanwhile, unlike what is shown, depending on an embodiment, both the first UWB device and the second UWB device may be ranging devices that use the framework API, or both the first UWB device and the second UWB device may be ranging devices that use the proprietary interface.

The first electronic device 210a and the second electronic device 220a may include UWB-enabled application layers (UWB-enabled applications) 211a and 221a, frameworks 212a and 222a, OOB components (OOB subsystems) 213a and 223a, secure components 214a and 224a, and/or UWBSs 215a and 225a, respectively. Depending on an embodiment, some components may be omitted or additional components may be included.

The first electronic device 210a and the second electronic device 220a may generate an OOB connection (channel) through the OOB components 213a and 223a, and generate a UWB connection (channel) through the UWBSs 215a and 225a to communicate with each other.

The framework 212a or 222a may serve to provide access to a profile, an individual UWB configuration, and/or a notification. The framework 212a or 222a is a set of software components, and may include, for example, a profile manager, an OOB connector, a secure service, and/or a UWB service.

The OOB component 213a or 223a may be a hardware component including a MAC layer and/or a physical layer for OOB communication (for example, BLE communication). The OOB component 213a or 223a may communicate with an OOB component of another device. In an embodiment, the first UWB device 210a and the second UWB device 220a may generate an OOB connection (channel) by using the OOB components 213a and 223a, and exchange parameters for establishing a UWB session through the OOB channel. In the disclosure, the OOB component 213a or 223a may be referred to as an OOB subsystem.

The secure component 214a or 224a may be a hardware component that interfaces with a framework and/or a UWBS to provide an RDS. As an embodiment, the secure component 214a or 224a may be an SE (for example, eSE), a TEE (or trusted application (TA) within a TEE), or a strongbox (SB).

The UWBS 215a or 225a may be a hardware component including a UWB MAC layer and a UWB physical layer. The UWBS 215a or 225a may perform UWB session management and may communicate with a UWBS of another UWB device. In an embodiment, the first UWB device 210a and the second UWB device 220a may perform UWB ranging and transaction of service data through a UWB session established through the UWBSs 215a and 225a by using the parameters exchanged with each other.

In the disclosure, a UWB-enabled application layer and/or a framework may be implemented by an application processor (AP) (or processor). Therefore, in the disclosure, the operation of the UWB-enabled application layer and/or the framework may be understood as being performed by an AP (or processor).

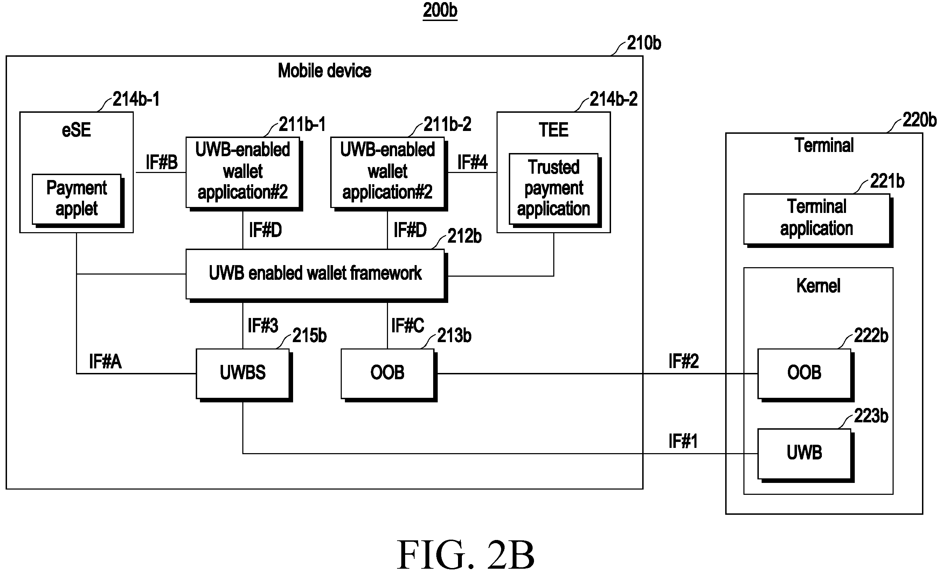

FIG. 2B illustrates an exemplary configuration of a communication system including an electronic device supporting a UWB-based service according to an embodiment of the disclosure.

An embodiment of FIG. 2B may be one example of the embodiment of FIG. 2A.

In the embodiment of FIG. 2B, a UWB-based service may be a UWB-based wallet service. In this disclosure, embodiments of the disclosure are described based on the assumption that a UWB-based service is a UWB-based payment service, but the embodiments of the disclosure may also be applied to other types of UWB-based services.

Referring to FIG. 2B, a communication system 200b which provides a UWB-based payment service may include a first electronic device 210b and a second electronic device 220b. In FIG. 2B, the first electronic device may be referred to as a first UWB device, and the second electronic device may be referred to as a second UWB device.

### <First electronic device 210b>

The first electronic device 210b may be an electronic device of a user (e.g., a user's mobile device) for a UWB-based payment service. The first electronic device 210b may include at least one UWB enabled wallet application (UWB enabled application) 211b-1 and 211b-2, a UWB enabled wallet framework (framework) 212b, an OOB component 213b, at least one secure component 214b-1 and 214b-2, and/or a UWBS 215b. The description of each component may refer to the description of FIG. 2A.

Meanwhile, in the embodiment of FIG. 2B, for convenience of description, it is described that a UWB enabled application corresponds to a UWB enabled wallet application and a framework corresponds to a UWB enabled wallet framework, but embodiments are not limited thereto, and various UWB enabled applications and frameworks for providing various types of UWB-based services may be implemented. In FIG. 2B, the UWB enabled wallet application may be referred to as a UWB enabled application, a UWB enabled payment application, or the like, and the UWB enabled wallet framework may be referred to as a UWB enabled payment framework, a framework, or the like.
(1) The UWB enabled applications 211b-1 and 211b-2 may support at least one of the following features.
   - Hosting an applet (payment applet) for UWB-based payment in an SE (e.g., an embedded SE (eSE)) or a trusted application (trusted payment application) for UWB-based payment in a TEE
   - If requested by the framework, providing arrangement information on anchors for estimating the location of the first electronic device and/or a UWB block structure (e.g., a ranging block structure).
   - Communication with a second electronic device and a backend server for personalization of a payment applet or a trusted payment application (TPA)
(2) The framework 212b may support at least one of the following features.
   - Estimating the location of the first electronic device
   - Implementing UCI commands
   - Providing a set of APIs that allow a UWB-enabled application to access a UWBS and an OOB component
(3) The OOB component 213b may support the following features.
   - Implementing an OOB connection operation (e.g., a BLE connection operation)
(4) The trusted payment application 211b-2 may be included in the TEE and may support at least one of the following features.
   - Supporting a TEE client API
   - Implementing a trusted application
   - Implementing a secure channel protocol to communicate with the second electronic device in a secure manner
   - Hosting payment credentials and cryptographic keys for a secure channel
   - Hosting important information (e.g., card information) for supporting a UWB-based payment service
(5) The payment applet 211b-1 may be included in the SE (eSE) and may support at least one of the following features.
   - Supporting an APDU
   - Implementing a secure channel protocol to communicate with the second electronic device in a secure manner
   - Hosting payment credentials and cryptographic keys for a secure channel
   - Hosting important information (e.g., card information) for supporting a UWB-based payment service

Each component of the first electronic device 210b may communicate with another component through a predefined interface IF. Hereinafter, each interface is described.
- IF#1: An interface between the UWBS 215b of the first electronic device 210b and a UWBS (e.g., a UWBS 223b of the second electronic device 220b) of another electronic device. IF#1 may be used to exchange UWB messages and/or payment transaction.
- IF#2: An interface between the OOB component 213b of the first electronic device 210b and an OOB component (e.g., an OOB component 222b of the second electronic device 220b) of another electronic device. IF#2 may be used to exchange OOB messages.
- IF#3: An interface between the framework 212b and the UWBS 215b. IF#3 may be used to exchange UCI messages. For example, IF#3 may be used to exchange a UCI message (e.g., a UCI command/UCI notification, etc.) for establishing a secure channel between the trusted payment application 211b-2 and the UWBS 215b.
- IF#4: An interface between the UWB enabled application 211b-2 and the trusted payment application 211b-2 in the TEE. IF#4 may be used to exchange TEE commands through a TEE client API. For example, IF #4 may be used to exchange a TEE command for establishing a secure channel between the trusted payment application 211b-2 and the UWBS 215b.
- IF#A: An interface between the UWB enabled applications 211b-1 and 211b-2 and the UWBS 215b. IF#A may be, for example, a SUS external API.
- IF#B: An interface between the UWB enabled application 211b-2 and a payment applet 214b-1 in the SE (eSE). IF#B may be used to exchange APDUs through an object management application programming interface (OMAPI). For example, IF#B may be used to exchange an APDU for establishing a secure channel between the eSE and the UWBS.
- IF#C: An interface between the OOB component 213b and the framework 212b or the UWB enabled applications 211b-1 and 211b-2. For example, IF#C may be a host controller interface (HCI).
- IF#D: An interface between the UWB enabled applications 211b-1 and 211b-2 and the framework 212b. IF#D may be a framework API (API) provided by the framework 212b.

Meanwhile, although not shown in FIG. 2B, an interface between a TA (e.g., a trusted payment application) within a TEE 214b-2 and the UWBS 215b may be established or defined for transmission of an RDS including a UWB session key. In this case, a secure channel between the TA and the UWBS 215b may be established for protection of the interface between the TEE and the UWBS 215b. In addition, it is also possible to connect the TA and the UWBS 215b at a HW level by newly configuring a driver TA.

### <Second electronic device 220b>

The second electronic device 220b may be an electronic device (for example, a payment terminal (e.g., a point of service (PoS) terminal of a retail)) of a service provider for a UWB-based payment service. The second electronic device 220b may include a terminal application 221b, an OOB component 222b, and/or a UWBS 223b. As an embodiment, the terminal application 221b may be a UWB enabled application.

Depending on an embodiment, not only a user device for a UWB-based payment service, but also a payment terminal may have the same configuration as the configuration of the first electronic device 220b.

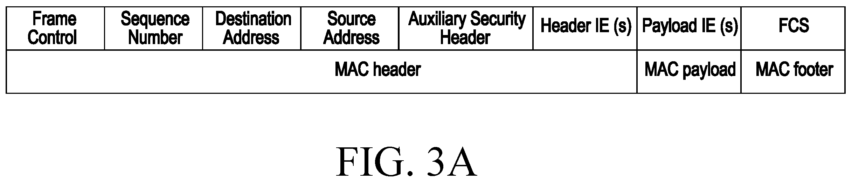

FIG. 3A illustrates a structure of a UWB MAC frame according to an embodiment of the disclosure.

In an embodiment of FIG. 3A, a UWB MAC frame may be simply referred to as a MAC frame or a frame. As an embodiment, the UWB MAC frame may be used to transmit UWB-related data (e.g., a UWB message, a ranging message, control information, service data, application data, etc.).

Referring to FIG. 3A, the UWB MAC frame may include a MAC header (MHR), a MAC payload, and/or a MAC footer (MFR).

### (1) MAC header

The MAC header may include a frame control field, a sequence number field, a destination address field, a source address field, an auxiliary security header field, and/or at least one header IE field. According to an embodiment, some of the fields described above may not be included in the MAC header, and additional field(s) may be further included in the MAC header.

In an embodiment, the frame control field may include a frame type field, a security enabled field, a frame pending field, an Ack request field (AR field), a PAN ID compression field (PAN ID present field), a sequence number suppression field, an IE present field, a destination addressing mode field, a frame version field, and/or a source addressing mode field. According to an embodiment, some of the fields described above may not be included in the frame control field, and additional field(s) may be further included in the frame control field.

The description of each field is as follows.

The frame type field may indicate a type of a frame. As an embodiment, the type of the frame may include a data type and/or a multipurpose type.

The security enabled field may indicate whether an auxiliary security header field is present. The auxiliary security header field may include information required for security processing.

The frame pending field may indicate whether a device, which transmits the frame, has more data for a recipient. That is, the frame pending field may indicate whether there is a pending frame for the recipient.

The Ack request field (AR field) may indicate whether an acknowledgment for reception of the frame is required from the recipient.

The PAN ID compression field (PAN ID present field) may indicate whether a PAN ID field is present.

The sequence number suppression field may indicate whether a sequence number field is present. The sequence number field may indicate a sequence identifier for the frame.

The IE present field may indicate whether a header IE field and a payload IE field are included in the frame.

The destination addressing mode field may indicate whether the destination address field includes a short address (e.g., 16 bits) or an extended address (e.g., 64 bits). The destination address field may indicate an address of the recipient of the frame.

The frame version field may indicate a version of the frame. For example, the frame version field may be configured to have a value indicating IEEE std 802.15.4z-2020.

The source addressing mode field may indicate whether the source address field is present and whether the source address field includes a short address (e.g., 16 bits) or an extended address (e.g., 64 bits) when the source address field is present. The source address field may indicate an address of an originator of the frame.

### (2) MAC payload

The MAC payload may include at least one payload IE field. In an embodiment, the payload IE field may include a vendor specific nested IE.

### (3) MAC footer

The MAC footer may include an FCS field. The FCS field may include a 16-bit CRC or a 32-bit CRC.

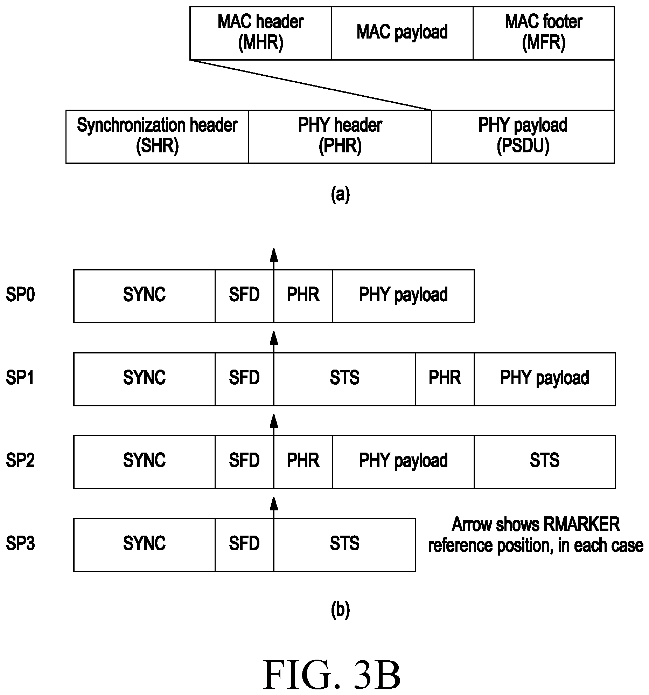

FIG. 3B illustrates a structure of a UWB PHY packet according to an embodiment of the disclosure.

Part (a) of FIG. 3B illustrates an exemplary structure of a UWB PHY packet to which an STS packet configuration is not applied, and part (b) of FIG. 3B illustrates an exemplary structure of a UWB PHY packet to which an STS packet configuration is applied. The UWB PHY packet may be referred to as a PHY packet, a PHY PDU (PPDU), or a frame.

Referring to part (a) of FIG. 3B, a PPDU may include a synchronization header (SHR), a PHY header (PHR), and a PHY payload (PSDU). The PSDU includes a MAC frame, and as shown in FIG. 3A, the MAC frame may include a MAC header (MHR), a MAC payload, and/or a MAC footer (MFR). A synchronization header part may be referred to as a preamble, and a part including the PHY header and the PHY payload may be referred to as a data part.

The synchronization header is used for synchronization for signal reception, and may include a SYNC field and a start-of-frame delimiter (SFD).

The SYNC field may be a field including a plurality of preamble symbols used for synchronization between transmission/reception devices. The preamble symbols may be configured through one of predefined preamble codes.

An SFD field may be a field indicating the end of the SHR and the start of a data field.

The PHY header may provide information on a configuration of the PHY payload. For example, the PHY header may include information on the length of the PSDU, information indicating whether a current frame is an RFRAME (or data frame), etc.

Meanwhile, a PHY layer of a UWB device may include an optional mode for providing a reduced on-air time for high density/low power operation. In this case, the UWB PHY packet may include an encrypted sequence (that is, an STS) for increasing the integrity and accuracy of a ranging measurement timestamp. The STS may be included in an STS field of the UWB PHY packet and may be used for secure ranging.

Referring to part (b) of FIG. 3B, when an STS packet (SP) configuration is 0 (SP0), an STS field is not included in a PPDU (SP0 packet). When the SP configuration is 1 (SP1), the STS field is located immediately after a start of frame delimiter (SFD) field and before a PHR field (SP1 packet). When the SP configuration is 2 (SP2), the STS field is located after a PHY payload (SP2 packet). When the SP configuration is 3 (SP3), the STS field is located immediately after the SFD field, and the PPDU does not include the PHR and data field (PHY payload) (SP3 packet). That is, in the case of SP3, the PPDU does not include the PHR and the PHY payload.

As illustrated in part (b) of FIG. 3B, each UWB PHY packet may include an RMARKER for defining a reference time, and the RMARKER may be used to obtain a transmission time, a reception time, and/or a time interval of a ranging message (frame) in a UWB ranging procedure.

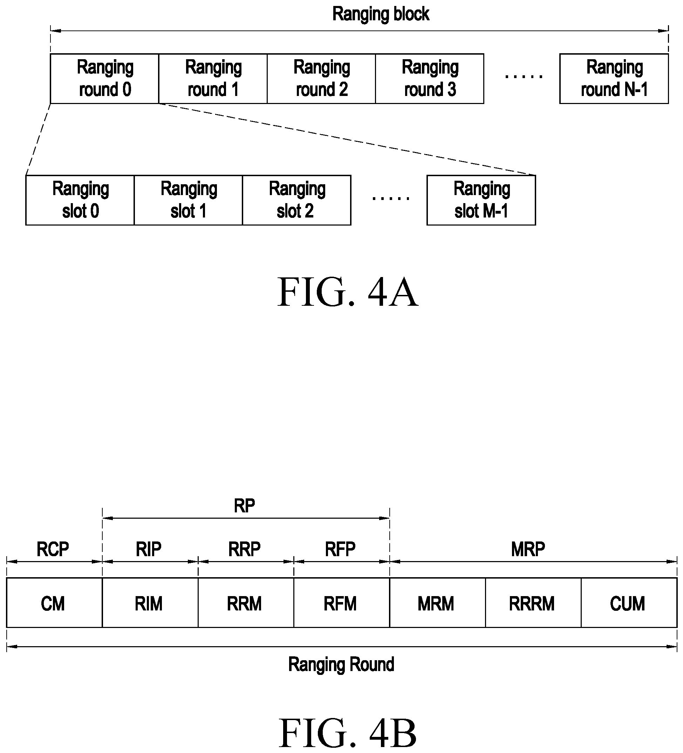

FIG. 4A illustrates an example of a ranging block structure according to an embodiment of the disclosure. FIG. 4B illustrates an example of a ranging round according to an embodiment of the disclosure.

Referring to FIG. 4A, one ranging block may include at least one ranging round, and each ranging round may include at least one ranging slot. For example, as illustrated, one ranging block may include N ranging rounds (e.g., ranging round 0 to ranging round index N-1), and ranging round #0 may include M ranging slots (e.g., ranging slot 0 to ranging slot M).

A ranging block refers to a time period for ranging. A ranging round may be a period of sufficient duration to complete one entire ranging-measurement cycle (ranging cycle) involving a set of ranging devices participating in a ranging exchange. A ranging slot may be a period of sufficient duration for transmission of at least one ranging frame (RFRAME) (for example, ranging initiation/response/final message, etc.).

Meanwhile, when a ranging mode is a block-based mode, a mean time between consecutive ranging rounds may be a constant. Alternatively, when the ranging mode is an interval-based mode, a time between consecutive ranging rounds may be dynamically changed. That is, the interval-based mode may adopt a time structure having adaptive spacing.

The ranging block may be simply referred to as a block, the ranging round may be simply referred to as a round, and the ranging slot may be simply referred to as a slot.

Referring to FIG. 4B, one ranging round may include a ranging control phase (RCP), a ranging phase (RP), and/or a measurement report phase (MRP). For example, one ranging round may include one slot for an RCP, at least one slot for an RP, and/or at least one slot for an MRP.

Depending on an embodiment, some of the above-described phases may not be included in a ranging round, and an additional phase may be further included in the ranging round. For example, an RCP may not be included in the ranging round. In this case, a ranging control message (RCM) may be merged with a ranging initiation message (RIM). For example, a ranging control update phase (RCUP) and/or a ranging interval update phase (RIUP) may be further included in the ranging round.

The RCP may be a phase in which a controller transmits an RCM. The RCM may be a message transmitted by the controller to configure ranging parameters. In an embodiment, the RCM may be transmitted in a first slot (slot #0) of the ranging round. The RCM may be simply referred to as a control message (CM).

The RP may be a phase including a ranging initiation phase (RIP), a ranging response phase (RRP), and/or a ranging final phase (RFP).

The RIP may be a phase in which initiator(s) transmit RIM(s) to responder(s).

The RRP may be a phase in which responder(s) transmit their ranging response message(s) (RRM) to an initiator.

The RFP may be a phase in which an initiator transmits ranging final message(s) (RFM) to responder(s). The ranging final phase may be used only for DS-TWR.

The MRP may be a phase in which participating ranging devices exchange service information related to ranging measurement. In the MRP, a measurement report message (MRM), a ranging result report message (RRRM), and/or a control update message (CUM) may be transmitted. The MRM may be a message transmitted by a UWB device to exchange measurement information. The RRRM may be a message transmitted by the UWB device to report a ranging result. The CUM may be a message transmitted by the controller to update control information. The CUM may be referred to as a ranging control update message (RCUM).

The RCUP may be a phase in which the controller transmits a ranging control update message (RCUM). The ranging control update phase may be included in the last slot of a set of ranging rounds specified by the RCM. The RCUM may be a message transmitted by the controller to update ranging parameters for the next ranging round(s). The RCUM may be transmitted in the last slot of the ranging round(s) specified by the RCM. The RCUM may include some or all of information elements (IEs) employed by the RCM to update values of the parameters.

The ranging interval update phase (RIUP) may be a phase in which the controller transmits a ranging interval update message (RIUM). The RIUM may be a message transmitted by the controller to help in synchronization among participating ranging devices or to update an interval between ranging blocks. The RIUM includes a scheduled time of a first RIUM. The RIUM may include a scheduled time of the next RIUM before the next ranging block starts.

If necessary, the above-described multiple UWB messages may be merged into one message. For example, the RCM may be merged with the RIM and transmitted in the RIP. For example, in the case of non-deferred DS-TWR ranging, the RFM may be merged with the MRM and transmitted in the RFP.

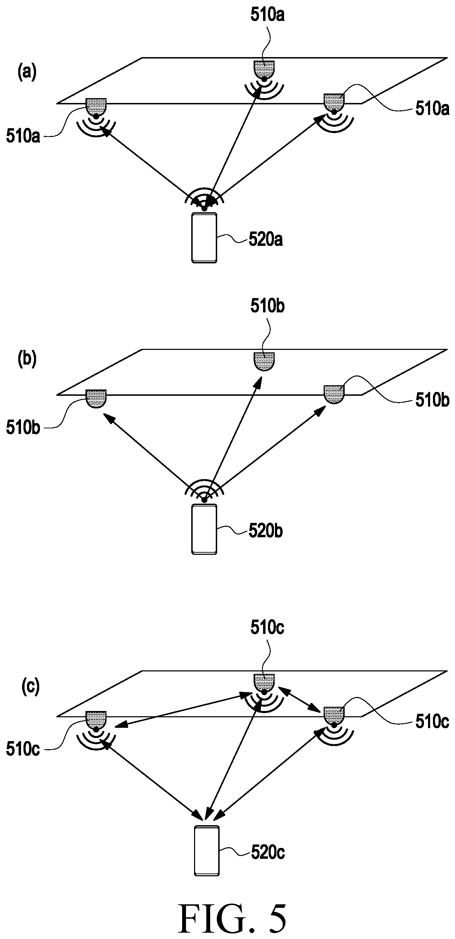

FIG. 5 illustrates various examples of a UWB ranging method according to an embodiment of the disclosure.

Part (a) of FIG. 5 illustrates an example of a two way ranging (TWR) scheme, part (b) of FIG. 5 illustrates an example of an uplink TDoA (UL-TDoA) scheme, which is a type of OWR, and part (c) of FIG. 5 illustrates an example of a downlink TDoA (DL-TDoA) scheme, which is a type of OWR.

Referring to part (a) of FIG. 5, a UWB device 520a of a user may perform ranging through a ranging exchange using a plurality of ranging messages with at least one UWB anchor 510a. Through such a ranging exchange (ranging message exchange), a time of flight (ToF) may be calculated, and a distance between two devices may be estimated.

The UWB device 520a may perform single-sided two-way ranging (SS-TWR) or double-sided two-way ranging (DS-TWR) with the UWB anchor 510a. When performing TWR, the UWB device 520a may serve as an initiator or a responder.

In an embodiment, TWR may be performed according to a hybrid-based mode, a contention-based mode, and/or a scheduling-based mode.

Referring to part (b) of FIG. 5, a UWB device (UWB tag) 520a of the user may transmit or broadcast a ranging message, and at least one UWB anchor 510b may obtain a TDoA, based on the received ranging message, and estimate the location of the UWB device 520b, based on the TDoA.

Referring to part (c) of FIG. 5, a UWB device (UWB tag) 520c of the user may estimate its location by receiving a ranging message transmitted/received between at least one UWB anchor 510c. The user device 520c performing a DL-TDoA operation may overhear a message transmitted by two anchor devices, and calculate a TDoA proportional to the difference in distance between each anchor device and the user device. The user device 520c may use a TDoA with multiple pairs of anchor devices to calculate relative distances to the anchor devices and use the calculated distances for positioning.

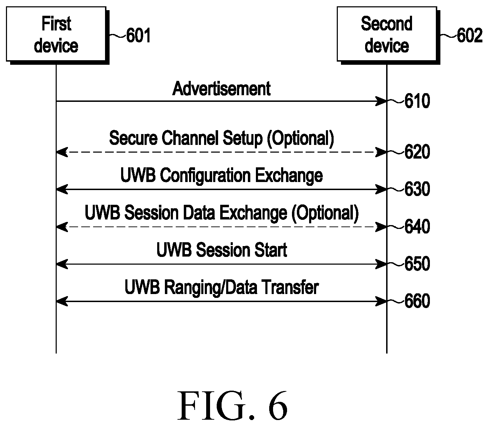

FIG. 6 illustrates an example of a procedure for establishing a UWB session according to an embodiment of the disclosure.

In an embodiment of FIG. 6, a first device 601 is an electronic device supporting UWB communication, and may be referred to as a first electronic device or a first UWB device. A second device 601 is an electronic device supporting UWB communication, and may be referred to as a second electronic device or a second UWB device.

Referring to FIG. 6, a procedure for establishing a UWB session between the first device 601 and the second device 602 may include at least one of the following steps.
- Step 610: The first device 601 may transmit or broadcast an advertisement message. In an embodiment, the advertisement message may be a UWB advertisement message (e.g., a UWB advertisement message). In another embodiment, the advertisement message may be an OOB advertisement message (e.g., a BLE advertisement message). The advertisement message may include application data associated with an application.

The second device 602 may receive the advertisement message. The second device 602 may perform device discovery and/or service discovery by using the advertisement message and/or the application data included in the advertisement message.

As an embodiment, the second device 602 may perform a ranging measurement (for example, an AoA measurement (e.g., an AoA azimuth and/or AoA elevation measurement)) for the advertisement message. The second device 602 may trigger (or execute) the application associated with the application data. For example, when an AoA measurement result for the advertisement message satisfies a preconfigured condition, the second device 602 may execute the application associated with the application data.
- Step 620: A secure channel may be established between the first device 601 and the second device 602. The secure channel may be used to securely transmit a message and/or data (information). Such a secure channel establishment procedure may be an optional procedure. For example, when UWB ranging using static STS is performed, step 620 may be omitted.
- Step 630: UWB configuration information may be exchanged between the first device 601 and the second device 602. As an embodiment, the UWB configuration information may be determined by a controller to configure a configuration to be used for a UWB session, and transmitted to a controlee.

Table 1 below shows an example of UWB configuration parameters which may be included in the UWB configuration information. As an embodiment, the UWB configuration information may include all or some of the UWB configuration parameters of Table 1.

**[Table 1]**

| **Parameter** | **Notes** | **Default Val ue** |
|---|---|---|
| UWB Sessio n ID | Identifier for UWB Session. 32 bit unsigned integer | N/A |
| UWB Sub-se ssion ID | UWB Sub-session ID for the controlee device. Only required for Dynamic STS using Responder Spe cific Sub-session Key | N/A |
| FiRa PHY v ersion | FiRa PHY version to be used | N/A |
| FiRa MAC v ersion | FiRa MAC version to be used | N/A |
| Device Role | 0 = Responder | 0 |
| | 1 = Initiator | |
| Ranging Met hod | 0 = One Way Ranging (OWR) | 2 |
| | 1 = Single-Sided Two-Way Ranging (SS-TWR) with D eferred Mode | |
| | 2 = Double-Sided Two-Way Ranging (DS-TWR) with Deferred Mode | |
| | 3 = Single-Sided Two-Way Ranging (SS-TWR) with Non-deferred Mode | |
| | 4 = Double-Sided Two-Way Ranging (DS-TWR) with Non-deferred Mode | |
| Multi-node M ode | 0 = Unicast Ranging | 0 |
| | 1 = One-to-Many Ranging | |
| | 2 = Many-to-Many Ranging | |
| RFRAME Co nfiguration | 0 = SP0 | 3 |
| | 1 = SP1 | |
| | 2 = RFU | |
| | 3 = SP3 | |
| STS Config | 0 = Static STS | 0 |
| | 1 = Dynamic STS using a single UWB Session Key for all Responders | |
| | 2 = Dynamic STS using Responder Specific Sub-ses sion Key | |
| Round Hoppi ng | Round Hopping | 0 |
| | 0: Disabled | |
| | 1: Enabled | |
| Scheduled M ode | 0: Contention Based Ranging | 1 |
| | 1: Time Scheduled Ranging | |
| Maximum C ontention Ph ase Length | Maximum number of slots for Contention-Based rangi ng | 50 |
| ToF Report | 0 = No ToF Report | 1 |
| | 1 = ToF Report | |
| AoA Azimuth Report | 0 = No AoA Azimuth Report | 0 |
| | 1 = AoA Azimuth Report | |
| AoA Elevation Report | 0 = No AoA Elevation Report | 0 |
| | 1 = AoA Elevation Report | |
| AoA FOM Report | 0: No AoA FOM Report | 0 |
| | 1: AoA FOM Report | |
| Ranging Time Structure | This parameter tells about the type of time structure for ranging | 1 |
| | 0 = Interval Based Mode | |
| | 1 = Block-based Mode | |
| Block Striding | Block Striding | 0 |
| | 0: Disabled | |
| | 1: Enabled | |
| Slots per Ranging Round | Number of slots per ranging round. This parameter is not applicable for contention based ranging. This parameter is used to specify the ranging Round Duration in multiples of Slot Duration | 30 |
| Slot Duration | Unsigned integer that specifies the duration of a ranging slot in the unit of RSTU. | 2400 |
| Ranging Interval | Expressed in the unit of 1200 RSTU which is 1 ms between beginning of one ranging round to the beginning of the next. Minimum Ranging Interval should be at least the duration of one ranging round length. | 200 |
| Responder Slot Index | This parameter is used to choose Responderindex in Two Way Ranging. It is not applicable to the Initiator. | 1 |
| | Note: the in-band Control Message takes priority and may override this setting | |
| Channel number | Unsigned integer that specifies channel number to be used. Allowed values include: [5, 6, 8, 9, 10, 12, 13, 14] | 9 |
| Preamble code index | Unsigned integer that specifies code index according to Table 16-7 in IEEE Std 802.15.4-2020 and Table 42 in IEEE Std 802.15.4-2020 | 10 |
| | Value range: 9 - 12 for BPRF Mode | |
| | Value range: 25 - 32 for HPRF | |
| PRF Mode | 0: BPRF mode | 0 |
| | 1: HPRF mode | |
| SP0 PHY parameter set | SP0 PHY parameter set# according to Table 2 or Table 3 of FiRa Consortium UWB PHY Technical Requirements (see Appendix E for supported set pairs). | N/A |
| SP1 PHY parameter set | SP1 PHY parameter set# according to Table 2 or Table 3 of FiRa Consortium UWB PHY Technical Requirements (see Appendix E for supported set pairs) | N/A |
| SP3 PHY parameter set | PHY parameter set# according to Table 2 or Table 3 of FiRa Consortium UWB PHY Technical Requirements (see Appendix E for supported set pairs) | N/A |
| Max RR retry | Number of failed ranging rounds before timing out. | 0 |
| | Note: The number of retries must be chosen so that the total retry time does not exceed 10s due to FCC rules | |
| Constraint length of convolutional code | 0: K=3 (Systematic convolutional encoding), | 0 |
| | 1: K=7 (Non-systematic convolutional encoding) | |
| | Note: For BPRF mode, systematic convolutional encoding shall be used. | |
| UWB initiation time | Time taken for UWB initiation (in the unit of 1200 RSTU) Controller shall transmit UWB frames after UWB initiation time from transmitting timing of this parameter. | 0 |
| | Controller should set UWB initiation time in consideration of UWB initiation time of Controlee. | |
| Key Rotation | When Key Rotation is enabled then the Key Rotation Rate parameter is applicable. | 0 |
| | 0: Disabled | |
| | 1: Enabled | |
| Key Rotation Rate | Defines n, with 2^n being the rotation rate of secDerivedPayloadKey, secDerivedAuthenticationlv, and secDerivedAuthenticationKey. If this parameter has value 0x3F, then no key rotation will be applied | 0 |
| MAC FCS Type | 0: 2 octets CRC will be used for FCS in MAC footer | 0 |
| | 1: 4 Octets CRC will be used for FCS in MAC footer | |
| MAC Address Mode | Note: For BPRF mode, 2 octets CRC shall be used. | 0x00 |
| | The application can configure MAC Addressing mode to be used in UWBS, possible configurations are Short MAC address (2 octets) will be used in MAC header Extended MAC address (8 octets) will be used in MAC header | |
| | 0x00 - MAC address is 2 bytes and 2 bytes to be used in MAC header | |
| | 0x01 - MAC address is 8 bytes and 2 bytes to be used in MAC header (Not supported) | |
| | 0x02 - MAC address is 8 bytes and 8 bytes to be used in MAC header | |
| | Note: Both Device MAC Address and DST MAC Address to be sent with above addressing mode. | |
| Controlee short MAC address | Short MAC address assigned by the Controller to Controlee. In case that extended 8 byte MAC addresses are used (MAC_ADDRESS_MODE) this element shal be omitted. | N/A |
| Number of Controlees | The number of Controlees (N). The number of Controlees for one-to-many ranging the number Controlee can be between 1 to 8 as mandatory but implementation can support more than 8 anchors | 1 |
| Controller MAC Address | MAC address of the controller. Depending on MAC Address Mode this is either a 2 byte short or an 8 byte extended MAC address | N/A |

- Step 640: UWB session information (data) may be exchanged between the first device 601 and the second device 602. As an embodiment, the UWB session information may be used by the controller to configure a UWB session configuration.

Table 2 below shows an example of UWB session data parameters which may be included in the UWB session information. As an embodiment, the UWB session information may include all or some of the UWB session data parameters of Table 2.

**[Table 2]**

| **Tag** | **Tag** | **Len gth** | **Parameter Name** | **Description** |
|---|---|---|---|---|
| 0x80 | | 2 | UWB_SESSION_DATA_VERSION | This two byte field should be interpreted as two unsigned integer numbers representing the major and minor version. |
| | | | | E.g., '0101' = V1.1 |
| 0x81 | | 4 | UWB_SESSION_ID | Identifier for UWB session |
| 0x82 | | 4 | UWB_SUB_SESSION_ID | UWB Sub-session ID for the controlee device. |
| | | | | Only required for Dynamic STS using Responder Specific Sub-session Key (STS_CONFIG =2) |
| 0xA3 | | Var. | CONFIGURATION_PARAMETERS | UWB session parameters according to UCI specification |
| | 0x80 | 2 | FIRA_PHY_VERSION | FiRa PHY version to be used e.g., '0101' = Version 1.1 |
| | 0x81 | 2 | FIRA_MAC_VERSION | FiRa MAC version to be used e.g., '0101'= Version 1.1 |
| | 0x82 | 1 | DEVICE_ROLE | 0 = Responder |
| | | | | 1 = Initiator |
| | | | | If omitted device role Responder is assumed. |
| | 0x83 | 1 | RANGING_METHOD | 0 = One Way Ranging aka TDoA |
| | | | | 1 = SS-TWR with Deferred Mode |
| | | | | 2 = DS-TWR with Deferred Mode |
| | | | | 3 = SS-TWR with Non-deferred Mode |
| | | | | 4 = DS-TWR with Non-deferred Mode |
| | | | | If omitted DS-TWR with Deferred Mode (2) is assumed. |
| | 0x84 | 1 | STS_CONFIG | This parameter indicates how system shall generate the STS. |
| | | | | 0 = Static STS (default) |
| | | | | 1 = Dynamic STS |
| | | | | 2 = Dynamic STS using Responder ; Specific Sub-session Key |
| | 0x85 | 1 | MULTI_NODE_MODE | 0 = Single device to Single device (Unicast) |
| | | | | 1 = One to Many |
| | | | | 2 = Many to Many |
| | 0x86 | 1 | RANGING_TIME_STRUCT | 0 = Interval Based Scheduling |
| | | | | 1 = Block Based Scheduling |
| | | | | If omitted Block Based Scheduling is assumed. |
| | 0x87 | 1 | SCHEDULED_MODE | This parameter is used to set the Multinode Ranging Type. |
| | | | | 0 = Contention based ranging |
| | | | | 1 = Time scheduled ranging |
| | | | | If omitted Time scheduled ranging is assumed. |
| | 0x88 | 1 | HOPPING _MODE | This parameter is used to enable/disable hopping |
| | | | | 0 = Disable |
| | | | | 1 = Enable |
| | | | | If omitted it is assumed that hopping ins disabled. |
| | 0x89 | 1 | BLOCK_STRIDING | 0 = No block striding |
| | | | | 1 = Blocks can be skipped upon controller decision |
| | 0x8A | 4 | UWB_INITIATION_TIME | Time taken for UWB initiation in units of 1200 RSTU which is 1ms. |
| | | | | Controller shall transmit UWB frames after UWB initiation time from transmitting timing of this parameter. : |
| | | | | Controller should set UWB initiation time in consideration of UWB initiation time of Controlee [0-10000] |
| | | | | If omitted a value of 0 is assumed. |
| | 0x8B | 1 | CHANNEL_NUMBER | [5,6,8,9,10,12,13,14] |
| | | | | If omitted channel 9 is assumed. |
| | 0x8C | 1 | RFRAME_CONFIG | 0 = SP0: no STS in PPDU |
| | | | | 1 = SP1: STS follows SFD |
| | | | | 2 = SP2: STS follows PSDU |
| | | | | 3 = SP3: STS follows SFD, PPDU has no PHR or PSDU |
| | | | | If omitted SP3 is assumed. |
| | 0x8D | 1 | CC_CONSTRAINT_LENGTH | Specifies the constraint length of the convolutional code to be used. |
| | | | | 0 = (K=3) |
| | | | | 1 = (K=7) |
| | | | | If omitted K=3 is assumed. |
| | 0x8E | 1 | PRF_MODE | 0 = BPRF Mode |
| | | | | 1 = HPRF Mode |
| | | | | If omitted BPRF mode is assumed. |
| | 0x8F | 1 | SP0_PHY_SET# | SP0 PHY parameter set# according to Table 2 or Table 3 of FiRa Consortium UWB PHY Technical Requirements (see Appendix E for supported set pairs). |
| | 0x90 | 1 | SP1_PHY SET# | SP1 PHY parameter set# according to Table 2 or Table 3 of FiRa Consortium UWB PHY Technical Requirements (see Appendix E for supported set pairs). |
| | 0x91 | 1 | SP3_PHY_SET# | SP3 PHY parameter set# according to Table 2 or Table 3 of FiRa Consortium UWB PHY Technical Requirements (see Appendix E for supported set pairs). |
| | 0x92 | 1 | PREAMBLE_CODE_INDEX | Ci Code index |
| | | | | [9 - 12] - BPRF |
| | | | | [25 - 32] - HPRF |
| | 0x93 | 1 | RESULT_REPORT_CONFIG | This config is used to enable/disable the result reports. |
| | | | | 1 = Enable, 0 = Disable |
| | | | | Bit0 = TOF report |
| | | | | Bit1 = AOA azimuth report |
| | | | | Bit2 = AOA elevation report |
| | | | | Bit3 = AOA FOM report |
| | | | | Bit4 - Bit7 = RFU |
| | | | | This config is applicable only if a RANGING_ROUND_CONTROL with Result Report Phase is used (default = 1) : |
| | 0x94 | 1 | MAC_ADDRESS_MODE | MAC Addressing mode to be used in UWBS |
| | | | | '00' - MAC address is 2 bytes and 2 bytes to be used in MAC header |
| | | | | '01' - MAC address is 8 bytes and 2 bytes to be used in MAC header (Not supported) |
| | | | | '02' - MAC address is 8 bytes and 8 bytes to be used in MAC header (default = 0) |
| | 0x95 | 2 | CONTROLEE_SHORT_MAC_ADD : RESS | Short MAC address assigned by the Controller to Controlee. In case that extended 8 byte MAC addresses are used (MAC_ADDRESS_MODE) this element shall be omitted. |
| | 0x96 | 2/8 | CONTROLLER_MAC_ADDRESS | MAC address of the controller. |
| | | | | Depending on MAC_ADDRESS_MODE this is either a 2 byte short or an 8 byte : extended MAC address. |
| | 0x97 | 1 | SLOTS_PER_RR | Number of slots for per ranging round and this config is not applicable for Contention based ranging. This config is used to specify the ranging Round Duration in multiple of SLOT_DURATION |
| | 0x98 | 1 | MAX_CONTENTION_PHASE_LEN GTH | This parameter is used to set Maximum number of Slots for Contention Based Ranging |
| | 0x99 | 2 | SLOT_DURATION | Unsigned integer that specifies duration of a ranging slot in the unit of RSTU |
| | 0x9A | 2 | RANGING_INTERVAL | Ranging interval in the unit of 1200 RSTU which is 1 ms between beginning of one ranging round to the beginning of the next. Minimum ranging interval should be at least the duration of one ranging round length. : |
| | 0x9B | 1 | KEY_ROTATION_RATE | If this parameter is present, the key rotation feature during Dynamic STS is enabled. |
| | | | | Key rotation rate parameter defines n, with 2^n being the rotation rate of some keys used during Dynamic STS Ranging(STS_CONFIG=1), where n is in the range of 0<=n<=15. |
| | | | | Key rotation can be performed when nth bit of key have flipped. If omitted key rotation is assumed to be disabled. |
| | 0x9C | 1 | MAC_FCS_TYPE | type in MAC footer can be set as below: |
| | | | | '00' - CRC 16 (default) |
| | | | | '01' - CRC 32 |
| | 0x9D | 2 | MAX_RR_RETRY | Number of failed ranging round(RR) attempts the controller performs before stopping the session and move the Session State to SESSION_STATE_IDLE. |
| | | | | AP shall receive SESSION_STATUS_NTF with SESSION_STATE_IDLE states with Reason Code ('01') when consecutive ranging is not succeeded for maximum ranging round attempts [1-65535] |
| | | | | [0]: Termination is disabled and ranging round attempt is infinite. If omitted termination is disabled. |
| | | | | |
| 0xA4 | | Var. | STATIC_RANGING_INFO | Information for Static STS encryption |
| | 0x80 | 2 | VENDOR_ID . | Unique ID for vendor. Unique ID for vendor. This parameter is used to set vUpper64[15:0] for static STS. |
| | 0x81 | 6 | STATIC_STS_IV | Arbitrary value for static STS configuration which will be defined by vendor. This parameter is used to set vUpper64[63:16]. |
| 0xA5 | | Var. | SECURE_RANGING_INFO | Key information for dynamic STS |
| | 0x80 | Var. | UWB_SESSION_KEY_INFO | Data used to generate UWB Session Key exhanged in case of dynamic STS is used. |
| | 0x81 | Var. | RESPONDER_SPECIFIC_SUB_SE SSION_KEY_INFO | Data used to generate Responder Specific Sub-session Key. |
| | | | | This config is mandatory and it is applicable if STS_CONFIG is set to 2 for controlee device. |
| | 0x82 | Var. | SUS_ADDITIONAL_PARAMS | Contents of the additional tags which are supported in the SUS specification, i.e. tags 'C2'-'CE'. |
| | | | | The contents of this object shall be passed as a BER-TLV containing all the additional tags to be added to a ranging data set. |
| | | | | For example, writing to this tag the TLV structure 8F 07 C2 02 <AoA value> C3 01 00, results in the data passed to the SUS Applet containing tags 'C2' and 'C3' as well as the other required tags as defined in Section 8.2.2.9.1 |
| 0xA6 | | Var. | REGULATORY_INFORMATION | Used if controller wants to share regulatory information with controlee |
| | 0x80 | 1 | INFORMATION_SOURCE | Source of Information for UWB Regulatory Information |
| | | | | [0b0000xxxx] |
| | | | | Bit0 = User Defined |
| | | | | Bit1 = Satellite Navigation System (GPS/NaviIC etc) |
| | | | | Bit2 = Cellular system defined |
| | | | | Bit3 = Configured via another FiRa device |
| | 0x81 | 1 | OUTDOOR_PERMITTED | 0: Outdoors not permitted |
| | | | | 1: Outdoors permitted |
| | 0x82 | 2 | COUNTRY_CODE | Country Code of the region the devices identified as current position. |
| | | | | Encoded per ISO-3166-1-ALPHA-2 |
| | 0x83 | 4 | TIMESTAMP | EPOCH timestamp at which regulatory information was obtained |
| | 0x86 | 1 | CHANNEL5 | Information element is only present for allowed channels. |
| | 0x87 | 1 | CHANNEL6 | |
| | 0x88 | 1 | CHANNEL8 | Within the information element the maximum transmission power is encoded in in [dBm] (rounded off the floor, i.e., to the largest integer less or equal to the actual value). |
| | 0x89 | | CHANNEL9 | |
| | 0x8A | 1 | CHANNEL10 | |
| | 0x8B | 1 1 | CHANNEL12 | |
| | 0x8C | 1 | CHANNEL13 | |
| | 0x8D | 1 | CHANNEL14 | |
| 0x87 | | 1 | UWB_CONFIG_AVAILABLE | Make UWB Ranging Data Set available to the UWB subsystem when written. When read, a value of 0x00 indicates config is not valid |

As an embodiment, the UWB session information may be transmitted through the secure channel. Such a UWB session information exchange procedure may be an optional procedure. For example, when UWB ranging using static STS is performed, step 640 may be omitted.
- Step 650: A UWB session between the first device 601 and the second device 602 may be started. For example, a UWB session may be started after UWB parameters of the first device 601 and the second device 602 are configured through the previous step(s).
- Step 660: The first device 601 and the second device 602 may perform a UWB ranging procedure and/or a data transfer procedure through the established UWB session. The UWB ranging procedure and the data transfer procedure may be optional procedures.

For example, the first device 601 may perform OWR and/or TWR (e.g., DS-TWR or SS-TWR) with the second device 602. Accordingly, the first device 601 and the second device 602 may obtain a ranging measurement result. As an embodiment, the ranging measurement result may include a distance (range) measurement result and/or an AoA measurement result. The distance measurement result may include distance information between the two devices based on a ToF obtained through TWR (e.g., DS-TWR or SS-TWR). The AoA measurement result may include AoA elevation information and/or AoA azimuth information obtained through TWR (e.g., DS-TWR or SS-TWR) or OWR (e.g., OWR for AoA measurement).

For example, the first device 601 and/or the second device 601 may transfer data (e.g., service data) through an OOB channel or a UWB channel.

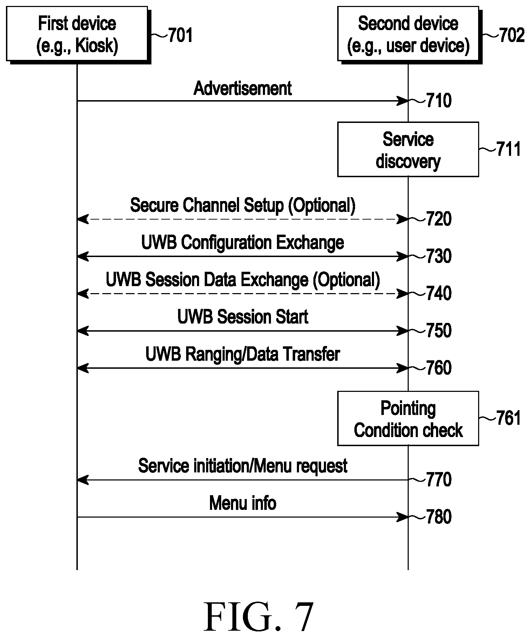

FIG. 7 illustrates an example of a procedure for establishing a UWB session and providing a service through the UWB session according to an embodiment of the disclosure.

In an embodiment of FIG. 7, for convenience of explanation, it is assumed that a first device 701 corresponds to a kiosk, a second device 702 corresponds to an electronic device (user device) of a user using the kiosk, and a service provided through a UWB session corresponds to a kiosk service such as menu ordering/payment, but the disclosure is not limited thereto. In the embodiment of FIG. 7, the first device 701 and the second device 702 correspond to UWB devices which support UWB communication.

Referring to FIG. 7, a procedure for establishing a UWB session and providing a service through the UWB session may include at least one of the following steps.
- Step 710: The first device 701 may transmit or broadcast an advertisement message. In an embodiment, the advertisement message may be a UWB advertisement message (e.g., a UWB advertisement message). In another embodiment, the advertisement message may be an OOB advertisement message (e.g., a BLE advertisement message). The advertisement message may include application data associated with an application.
- Step 711: The second device 702 may receive the advertisement message. The second device 702 may perform device discovery and/or service discovery by using the advertisement message and/or the application data included in the advertisement message.

As an embodiment, the second device 702 may perform a ranging measurement (for example, an AoA measurement (e.g., an AoA azimuth and/or AoA elevation measurement)) for the advertisement message. The second device 702 may trigger (or execute) the application associated with the application data. For example, when an AoA measurement result for the advertisement message satisfies a preconfigured condition, the second device 702 may execute the application associated with the application data.
- Step 720: A secure channel may be established between the first device 701 and the second device 702. The secure channel may be used to securely transmit a message and/or data (information). Such a secure channel establishment procedure may be an optional procedure. For example, when UWB ranging using static STS is performed, step 720 may be omitted.
- Step 730: UWB configuration information may be exchanged between the first device 701 and the second device 702. As an embodiment, the UWB configuration information may include all or some of the UWB configuration parameters of Table 1.
- Step 740: UWB session information may be exchanged between the first device 701 and the second device 702. As an embodiment, the UWB session information may include all or some of the UWB session data parameters of Table 2. As an embodiment, the UWB session information may be transmitted through the secure channel. Such a UWB session information exchange procedure may be an optional procedure. For example, when UWB ranging using static STS is performed, step 740 may be omitted.
- Step 750: A UWB session between the first device 701 and the second device 702 may be started. For example, a UWB session may be started after UWB parameters of the first device 701 and the second device 702 are configured through the previous step(s).
- Step 760: The first device 701 and the second device 702 may perform a UWB ranging procedure and/or a data transfer procedure through the established UWB session.

For example, the first device 601 may perform OWR and/or TWR (e.g., DS-TWR or SS-TWR) with the second device 602. Accordingly, the first device 601 and the second device 602 may obtain a ranging measurement result. As an embodiment, the ranging measurement result may include a distance (range) measurement result and/or an AoA measurement result. The distance measurement result may include distance information between the two devices based on a ToF obtained through TWR (e.g., DS-TWR or SS-TWR). The AoA measurement result may include AoA elevation information and/or AoA azimuth information obtained through TWR (e.g., DS-TWR or SS-TWR) or OWR (e.g., OWR for AoA measurement).

For example, the first device 601 and/or the second device may transfer data (e.g., service data) through an OOB channel or a UWB channel.
- Step 761: The second device 702 may determine whether a preconfigured condition (e.g., a pointing condition) is satisfied. As an embodiment, the second device 702 may determine whether a preconfigured pointing condition is satisfied, based on the ranging measurement result. For example, the second device 702 may determine whether the preconfigured pointing condition is satisfied, based on the distance (range) measurement result and/or the AoA measurement result. For example, the second device 702 may determine that the preconfigured pointing condition is satisfied when a distance to the first device 701 is within a preconfigured distance (e.g., within 5 meters) and an AoA value is within a preconfigured angle or angle range (e.g., an AoA azimuth is within a range of -5° to +5°). Accordingly, the user's intention to use a service provided by the first device 701 may be identified.
- Step 770: The second device 702 may transmit a service initiation/menu request message (request message) to the first device 701. For example, when the pointing condition is satisfied, the second device 702 may transmit the service initiation/menu request message to the first device 701. That is, when it is identified that the user has the intention to use the service provided by the first device 701 according to the satisfaction of the pointing condition, the second device 702 may transmit the service initiation/menu request message to the first device 701.
- Step 780: The first device 701 may transmit menu information to the second device 702. For example, in response to the request message of step 770, the first device 701 may transmit a response message including the menu information to the second device 702. The second device 702 may perform subsequent procedures for menu ordering/payment by using the menu information.

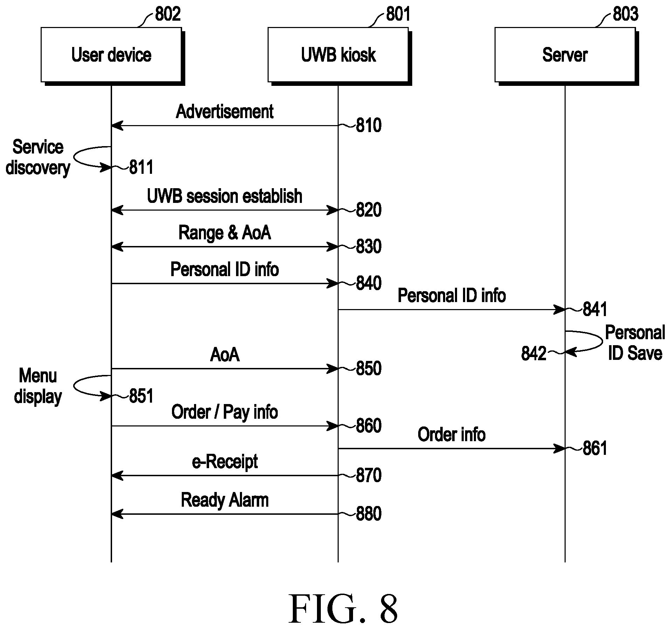

FIG. 8 illustrates an example of a procedure for establishing a UWB session and providing a service through the UWB session according to an embodiment of the disclosure.

In an embodiment of FIG. 8, for convenience of explanation, it is assumed that a first device 801 corresponds to a kiosk, a second device 802 corresponds to an electronic device (user device) of a user using the kiosk, a third device 803 corresponds to a server (payment server) for payment, and a service provided through a UWB session corresponds to a kiosk service such as menu ordering/payment, but the disclosure is not limited thereto. In the embodiment of FIG. 8, the first device 801 and the second device 802 correspond to UWB devices which support UWB communication.

Referring to FIG. 8, a procedure for establishing a UWB session and providing a service through the UWB session may include at least one of the following steps.
- Step 810: The first device 801 may transmit or broadcast an advertisement message. In an embodiment, the advertisement message may be a UWB advertisement message (e.g., a UWB advertisement message). In another embodiment, the advertisement message may be an OOB advertisement message (e.g., a BLE advertisement message). The advertisement message may include application data associated with an application.
- Step 811: The second device 802 may receive the advertisement message. The second device 802 may perform device discovery and/or service discovery by using the advertisement message and/or the application data included in the advertisement message.

As an embodiment, the second device 802 may perform a ranging measurement (e.g., an AoA measurement) for the advertisement message. The second device 802 may trigger (or execute) the application associated with the application data. For example, when an AoA measurement result for the advertisement message satisfies a preconfigured condition, the second device 802 may execute the application associated with the application data.
- Step 820: A UWB session between the first device 801 and the second device 802 may be established. For establishing the UWB session, a UWB configuration information exchange procedure (e.g., the UWB configuration information exchange procedure in step 630 of FIG. 6 or the UWB configuration information exchange procedure in step 730 of FIG. 7) may be performed. In addition, for establishing the UWB session, a secure channel establishment procedure (e.g., the secure channel establishment procedure in step 620 of FIG. 6 or the secure channel establishment procedure in step 720 of FIG. 7) and/or a UWB session information exchange procedure (e.g., the UWB session information exchange procedure in step 640 of FIG. 6 or the UWB session information exchange procedure in step 740 of FIG. 7) may be optionally further performed.
- Step 830: The first device 801 and the second device 802 may perform a UWB ranging procedure through the established UWB session. For example, the first device 801 may perform OWR and/or TWR (e.g., DS-TWR or SS-TWR) with the second device 802. As an embodiment, the UWB ranging procedure may be repeatedly performed. For example, the UWB ranging procedure may be periodically performed.

Accordingly, the first device 801 and the second device 802 may obtain a ranging measurement result. As an embodiment, the ranging measurement result may include a distance (range) measurement result and/or an AoA measurement result. The distance measurement result may include distance information between the two devices based on a ToF obtained through TWR (e.g., DS-TWR or SS-TWR). The AoA measurement result may include AoA elevation information and/or AoA azimuth information obtained through TWR (e.g., DS-TWR or SS-TWR) or OWR (e.g., OWR for AoA measurement).
- Step 840: The second device 802 may transmit user ID information (personal ID info) of the second device 802 to the first device 801. As an embodiment, the second device 802 may transmit the user ID information through an OOB channel (e.g., a BLE channel) or a UWB channel. Step 840 may be an optional step.
- Steps 841 and 842: In step 841, the first device 801 may transmit the user ID information to the third device 803. In step 842, the third device 803 may store the user ID information. Step 841 and/or step 842 may be optional steps.
- Step 850: The first device 801 may perform an AoA measurement. As an embodiment, the first device 801 may perform UWB OWR for the AoA measurement. For example, the second device 802 may transmit a UWB OWR message for the AoA measurement, and the first device 801 may measure an AoA, based on the UWB OWR message.
- Step 851: The second device 802 may display menu information on a display of the second device 802. As an embodiment, steps 761, 770, and/or 780 of FIG. 7 may be performed prior to step 851.
- Step 860: The second device 802 may transmit menu ordering/payment information to the first device 801. The second device 802 may transmit the menu ordering/payment information through the OOB channel (e.g., a BLE channel) or the UWB channel.
- Step 861: The first device 801 may transmit the menu ordering/payment information to the third device 803. The menu ordering/payment information may be used to process payment for an ordered menu item.
- Step 870: The first device 801 may transmit receipt information (e-receipt) corresponding to the menu order to the second device 802. The first device 801 may transmit the receipt information through the OOB channel (e.g., a BLE channel) or the UWB channel.
- Step 880: The first device 801 may transmit, to the second device 802, to a ready alarm notifying that a menu item corresponding to the menu order is ready. The first device 801 may transmit the ready alarm through the OOB channel (e.g., a BLE channel) or the UWB channel.

### [1: N multiple connections]

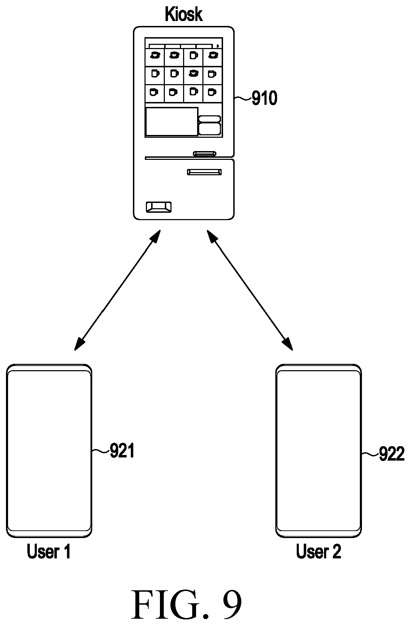

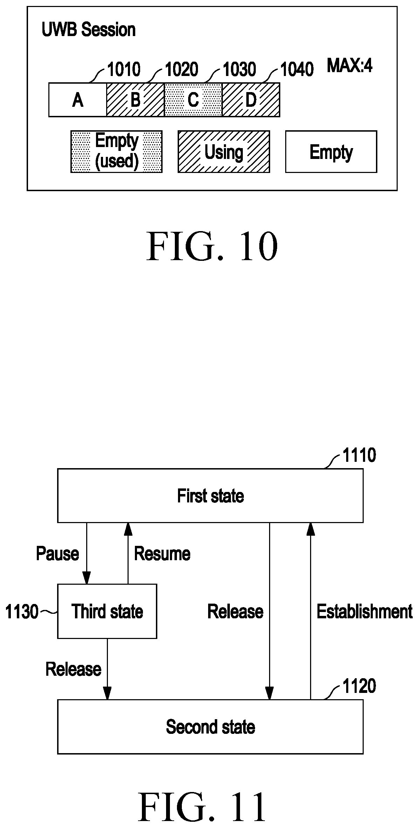

FIG. 9 illustrates an example of multiple connections according to an embodiment of the disclosure. FIG. 10 illustrates an example of a UWB session state according to an embodiment of the disclosure.

In an embodiment of FIG. 9, for convenience of explanation, it is assumed that a first device 910 corresponds to a kiosk, a plurality of second devices 921 and 922 correspond to electronic devices (user devices) of respective users using the kiosk, and multiple connections are established when two user devices 921 and 922 are connected to one kiosk 910, but the disclosure is not limited thereto. For example, three or more user devices can also be connected to one kiosk 910. In the embodiment of FIG. 9, the first device/kiosk 910 and the second devices/user devices 921 and 922 correspond to UWB devices which support UWB communication.

As illustrated in FIG. 9, only one kiosk 910 may exist in a store. In this case, each user device 921 or 922 is required to establish a UWB session with the same kiosk 910 in order to use a service (e.g., an ordering/payment service) of the kiosk 910 remotely.

Meanwhile, the number of simultaneously connectable UWB sessions depends on the performance (e.g., UWB chipset performance) of the kiosk 910. For example, as illustrated in FIG. 10, the maximum number of simultaneously connectable UWB sessions may be 4. For example, 4 UWB sessions, such as UWB session A 1010, UWB session B 1020, UWB session C 1030, and UWB session D 1040, are simultaneously connectable to the kiosk 910, and UWB session B 1020 and UWB session D 1040 may be used by the first user device 921 and the second user device 922, respectively. As illustrated in FIG. 10, UWB session A 1010 may be an empty session, and UWB session C 1030 may be a session which has been used previously but is currently empty.

Meanwhile, in some cases, the number of user devices requiring a UWB connection to the kiosk 910 may be greater than the maximum number of simultaneously connectable UWB sessions to the kiosk 910. For example, although the number of UWB sessions is 4, such as in the UWB sessions of FIG. 10, the number of user devices requiring a simultaneous connection may exceed 4. In this case, a service using UWB communication may not be provided smoothly. Therefore, a method in which the kiosk 910 can appropriately manage the number of UWB sessions according to a situation is required.

FIG. 11 illustrates a transition diagram for a UWB connection state according to an embodiment of the disclosure.

Referring to FIG. 11, a UWB device (e.g., the first device 910, the second devices 921 and 922 of FIG. 9, etc.) may be in a first state 1110, a second state 1120, or a third state 1130.

The first state 1110 may be a state in which a UWB session is established and UWB data may be transmitted or received.

The second state 1120 may be a state in which the UWB session is released and the UWB data cannot be transmitted or received. In the case of the second state 1120, a configured UWB resource is released and UWB configuration information is deleted from the UWB device.

The third state 1130 may be a newly defined UWB connection state in which a part or all of the UWB configuration information (and/or UWB session information) is maintained in the UWB device. In the case of the third state 1130, the configured UWB resource is released like the second state 1120, but unlike the second state 1120, a part or all of the UWB configuration information (and/or UWB session information) is maintained in the UWB device.

The UWB device may switch a UWB connection state by using a specific procedure.

For example, through an establishment procedure (UWB session start procedure), the second state 1120 may be switched to the first state 1110.

For example, through a release procedure (UWB session stop procedure), the first state 1110 or the third state 1130 may be switched to the second state 1120.

For example, through a pause procedure (UWB session pause procedure), the first state 1110 may be switched to the third state 1130.

In the UWB session pause procedure, the UWB device may release the configured UWB resource. In the UWB session pause procedure, the UWB device may maintain some or all of configured UWB parameters (e.g., the UWB configuration parameters of Table 1 and/or the UWB session data parameters of Table 2). For example, in the UWB session pause procedure, the UWB device may maintain (or store) a parameter which uses a fixed value among the configured UWB configuration parameters (and/or UWB session data parameters) in the UWB device for re-use during UWB session resumption, and may delete a parameter which may be changed in real time from the UWB device.

Table 3 below shows an example of UWB configuration parameters using fixed values which may be maintained in the UWB session pause procedure.

**[Table 3]**

| UWB Session ID | Slots per Ranging Round |
|---|---|
| UWB Sub-session ID | Slot Duration |
| FiRa PHY version | Ranging Interval |
| FiRa MAC version | Channel number |
| Device Role | Preamble code index |
| Ranging Method | PRF Mode |
| Multi-node Node | SP0 PHY parameter set |
| RFRAME Configuration | SP1 PHY parameter set |
| STS Config | SP3 PHY parameter set |
| Round Hopping | Max RR retry |
| Scheduled Mode | Constraint length of convolutional code |

| Maximum Content ion Phase Length | UWB initiation time |
|---|---|
| ToF Report | Key Rotation |
| AoA Azimuth Report | Key Rotation Rate |
| AoA Elevation Report | MAC FCS Type |
| AoA FOM Report | MAC Address Mode |
| Ranging Time Structure | Controlee short MAC address |
| Block Striding | Controller MAC Address |

Table 4 below shows an example of UWB session data parameters using fixed values which may be maintained in the UWB session pause procedure.

**[Table 4]**

| | |
|---|---|
| UWB_SESSION_DATA_VERSION | SP0_PHY_SET# |
| UWB_SESSION_ID | SP1_PHY_SET# |
| UWB_SUB_SESSION_ID | SP3_PHY_SET# |
| FIRA_PHY_VERSION | PREAMBLE_CODE_INDEX |
| FIRA_MAC_VERSION | RESULT_REPORT_CONFIG |
| DEVICE_ROLE | MAC_ADDRESS_MODE |
| RANGING_METHOD | CONTROLEE_SHORT_MAC_ADDRESS |
| STS_CONFIG | CONTROLLER _MAC_ADDRESS |
| MULTI_NODE_NODE | SLOTS_PER_RR |

| | |
|---|---|
| RANGING_TIME_STRUCT | MAX_CONTENTION_PHASE_LENGTH |
| SCHEDULED_MODE | SLOT_DURATION |
| HOPPING_MODE | RANGING_INTERVAL |
| BLOCK_STRIDING | KEY_ROTATION_RATE |
| UWB_INITIATION_TIME | NAC_FCS_TYPE |
| CHANNEL_NUMBER | NAX_RR_RETRY |
| RFRAME_CONFIG | VENDOR_ID |
| CC_CONSTRAINT_LENGTH | STATIC_STS_IV |
| PRF_NODE | UWB_CONFIG_AVAILABLE |

For example, through a resumption procedure (UWB session resumption procedure), the third state 1130 may be switched to the first state 1110.

In the UWB session resumption procedure, the UWB device may reuse the maintained UWB parameter(s) (e.g., the maintained UWB configuration parameters of Table 3 and/or the maintained UWB session data parameters of Table 4). In the UWB session resumption procedure, the UWB device may perform a UWB configuration information exchange procedure (e.g., step 630 of FIG. 6, step 730 of FIG. 7, etc.) and/or a UWB session information exchange procedure (e.g., step 640 of FIG. 6, step 740 of FIG. 7, etc.) to reconfigure the deleted UWB parameter(s). Meanwhile, when all of the configured UWB configuration parameters have fixed values, all of the UWB configuration parameters may be maintained in the UWB session pause procedure. In this case, the UWB configuration information exchange procedure may be omitted in the UWB session resumption procedure.

Through the third state 1130 described above, the number of UWB sessions may be adaptively managed, and a UWB resource may be efficiently used. For example, in the case where a service is required to be provided to a plurality of user devices through one kiosk, when a real-time data transaction with the corresponding user device is not required, the kiosk may pause a UWB connection/session with the corresponding user device for a while and then resume the UWB connection/session, thereby seamlessly providing the previous service.

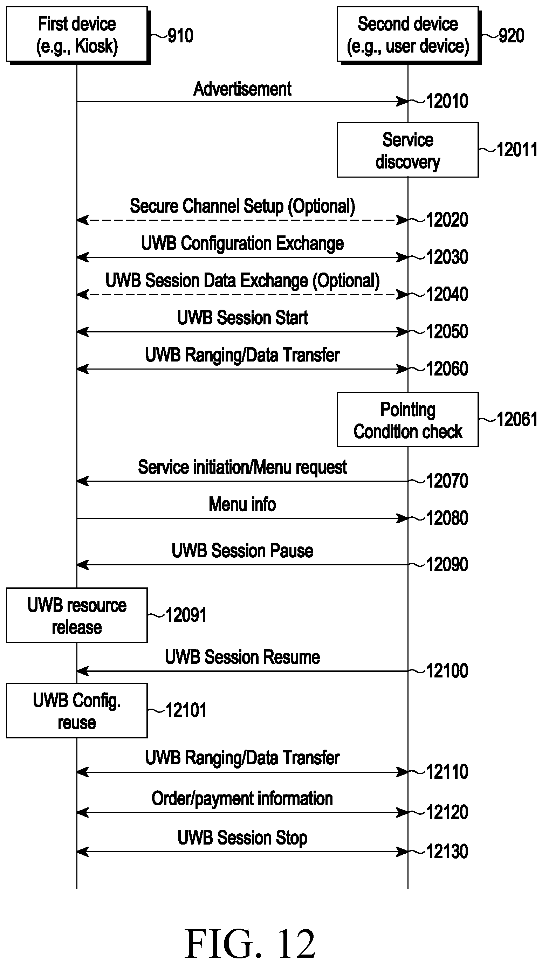

FIG. 12 illustrates an example of a method for managing the number of UWB sessions by using a UWB session pause/resumption procedure according to an embodiment of the disclosure.

In an embodiment of FIG. 12, for convenience of explanation, it is assumed that the first device 910 corresponds to a kiosk, the second device 920 (e.g., the second device 921 or the second device 922 of FIG. 9) corresponds to an electronic device (user device) of a user using the kiosk, and a service provided through a UWB session corresponds to a kiosk service such as menu ordering/payment, but the disclosure is not limited thereto. In the embodiment of FIG. 12, the first device 910 and the second device 920 correspond to UWB devices which support UWB communication.

Referring to FIG. 12, a procedure for establishing a UWB session and providing a service through the UWB session may include at least one of the following steps.
- Step 12010: The first device 910 may transmit or broadcast an advertisement message. In an embodiment, the advertisement message may be a UWB advertisement message (e.g., a UWB advertisement message). In another embodiment, the advertisement message may be an OOB advertisement message (e.g., a BLE advertisement message). The advertisement message may include application data associated with an application.
- Step 12011: The second device 920 may receive the advertisement message. The second device 920 may perform device discovery and/or service discovery by using the advertisement message and/or the application data included in the advertisement message.

As an embodiment, the second device 920 may perform a ranging measurement (e.g., an AoA measurement) for the advertisement message. The second device 920 may trigger (or execute) the application associated with the application data. For example, when an AoA measurement result for the advertisement message satisfies a preconfigured condition, the second device 920 may execute the application associated with the application data.
- Step 12020: A secure channel may be established between the first device 910 and the second device 920. The secure channel may be used to securely transmit a message and/or data (information). Such a secure channel establishment procedure may be an optional procedure. For example, when UWB ranging using static STS is performed, step 12020 may be omitted.
- Step 12030: UWB configuration information may be exchanged between the first device 910 and the second device 920. As an embodiment, the UWB configuration information may include all or some of the UWB configuration parameters of Table 1.
- Step 12040: UWB session information may be exchanged between the first device 910 and the second device 920. As an embodiment, the UWB session information may include all or some of the UWB session data parameters of Table 2. As an embodiment, a UWB session key may be transmitted through the secure channel. Such a UWB session information exchange procedure may be an optional procedure. For example, when UWB ranging using static STS is performed, step 12040 may be omitted.
- Step 12050: A UWB session between the first device 910 and the second device 920 may be started. For example, a UWB session may be started after UWB parameters of the first device 910 and the second device 920 are configured through the previous step(s).
- Step 12060: The first device 910 and the second device 920 may perform a UWB ranging procedure and/or a data transfer procedure through the established UWB session.

For example, the first device 910 may perform OWR and/or TWR (e.g., DS-TWR or SS-TWR) with the second device 920. Accordingly, the first device 910 and the second device 920 may obtain a ranging measurement result. As an embodiment, the ranging measurement result may include a distance (range) measurement result and/or an AoA measurement result. The distance measurement result may include distance information between the two devices based on a ToF obtained through TWR (e.g., DS-TWR or SS-TWR). The AoA measurement result may include AoA elevation information and/or AoA azimuth information obtained through TWR (e.g., DS-TWR or SS-TWR) or OWR (e.g., OWR for AoA measurement).

For example, the first device 910 and/or the second device 920 may transfer data (e.g., service data) through an OOB channel or a UWB channel.
- Step 12061: The second device 920 may determine whether a preconfigured condition (e.g., a pointing condition) is satisfied. As an embodiment, the second device 920 may determine whether a preconfigured pointing condition is satisfied, based on the ranging measurement result. For example, the second device 920 may determine whether the preconfigured pointing condition is satisfied, based on the distance (range) measurement result and/or the AoA measurement result. For example, the second device 920 may determine that the preconfigured pointing condition is satisfied when a distance to the first device 910 is within a preconfigured distance (e.g., within 5 meters) and an AoA value is within a preconfigured angle or angle range (e.g., an AoA azimuth is within a range of -5° to +5°). Accordingly, the user's intention to use a service provided by the first device 910 may be identified.
- Step 12070: The second device 920 may transmit a service initiation/menu request message (request message) to the first device 910. For example, when the pointing condition is satisfied, the second device 920 may transmit the service initiation/menu request message to the first device 910. That is, when it is identified that the user has the intention to use the service provided by the first device 910 according to the satisfaction of the pointing condition, the second device 920 may transmit the service initiation/menu request message to the first device 910.
- Step 12080: The first device 910 may transmit menu information to the second device 920. For example, in response to the request message of step 12070, the first device 910 may transmit a response message including the menu information to the second device 920. The menu information may be used by the second device 920 in subsequent procedures for menu ordering/payment.
- Step 12090: The second device 920 may transmit a message (UWB session pause message) for initiating a UWB session pause procedure to the first device 910. As an embodiment, when a preconfigured first condition is satisfied, the second device 920 may transmit the UWB session pause message to the first device 910. The preconfigured first condition is a condition for initiating the UWB session pause procedure, and for example, in a state in which the first device 910 and the second device 920 for which the UWB session has been established do not require a real-time data transaction (e.g., a user operation waiting state), it may be determined that the first condition has been satisfied. For example, the user operation waiting state may be a state in which the user is selecting a menu item to order.
- Step 12091: The first device 910 may release a UWB resource, based on the UWB session pause message. As an embodiment, in the UWB session pause procedure, the first device 910 and the second device 920 may maintain some or all of the UWB parameters (e.g., the UWB configuration parameters of Table 1 and/or the UWB session data parameters of Table 2). For example, in the UWB session pause procedure, the first device 910 and the second device 920 may maintain (or store) a parameter which uses a fixed value among the configured UWB configuration parameters (and/or UWB session data parameters) in the UWB device for re-use during UWB session resumption, and may delete a parameter which may be changed in real time from the UWB device. For example, some or all of the UWB configuration parameters of Table 3 may be maintained in the UWB session pause procedure. For example, some or all of the UWB session data parameters of Table 4 may be maintained in the UWB session pause procedure. Through such a UWB session pause procedure, the first device 910 and the second device 920 may be switched from a first state (e.g., the first state 1110 of FIG. 11) to a third state (e.g., the third state 1130 of FIG. 11).
- Step 12100: The second device 920 may transmit a message (UWB session resumption message) for initiating a UWB session resumption procedure to the first device 910. As an embodiment, when a preconfigured second condition is satisfied, the second device 920 may transmit the UWB session resumption message to the first device 910. The preconfigured second condition is a condition for initiating the UWB session resumption procedure, and for example, when the first device 910 and the second device 920, for which the UWB session has been paused, are switched to a state in which a real-time data transaction is required (e.g., a user operation state), it may be determined that the second condition has been satisfied. For example, the user operation state may be a state in which information (e.g., order/payment information) on a menu item to be ordered by the user needs to be transmitted to the first device 910. Through such a UWB session resumption procedure, the first device 910 and the second device 920 may be switched from the third state (e.g., the third state 1130 of FIG. 11) to the first state (e.g., the first state 1110 of FIG. 11).

As an embodiment, the UWB session resumption procedure may be initiated only when the preconfigured second condition is satisfied within a preconfigured period of time. For example, when the preconfigured second condition is not satisfied within the preconfigured period of time after the session is paused, a UWB connection state may transition from the third state (e.g., the third state 1130 of FIG. 11) to a second state (e.g., the second state 1120 of FIG. 11).
- Step 12110: The first device 910 may resume the UWB session, based on the UWB session resumption message. As an embodiment, in the UWB session resumption procedure, the first device 910 and the second device 920 may reuse the maintained UWB parameter(s) (e.g., the maintained UWB configuration parameters of Table 3 and/or the maintained UWB session data parameters of Table 4). In the UWB session resumption procedure, the first device 910 and the second device 920 may perform a UWB configuration information exchange procedure (e.g., step 630 of FIG. 6, step 730 of FIG. 7, step 12030 of FIG. 12, etc.) and/or a UWB session information exchange procedure (e.g., step 640 of FIG. 6, step 740 of FIG. 7, etc.) to reconfigure the deleted UWB parameter(s). Meanwhile, when all of the configured UWB configuration parameters have fixed values, all of the UWB configuration parameters may be maintained in the UWB session pause procedure. In this case, the UWB configuration information exchange procedure may be omitted in the UWB session resumption procedure.

Through such a session pause/resumption procedure, the number of UWB sessions may be adaptively managed, and a UWB resource may be efficiently used. For example, in the case where a service is required to be provided to a plurality of user devices through one kiosk, when a real-time data transaction with the corresponding user device is not required, the kiosk may pause a UWB connection/session with the corresponding user device for a while. In this case, the UWB resource released through the UWB session pause procedure may be used for a UWB session of another user device. Afterwards, the kiosk may resume the session through the UWB session resumption procedure with the user device for which the session has been paused, so that the previous service may be provided seamlessly to the user device for which the session has been paused.
- Step 12110: The first device 910 and the second device 920 may perform the UWB ranging procedure and/or the data transfer procedure through the resumed UWB session.

For example, the first device 910 may perform OWR and/or TWR (e.g., DS-TWR or SS-TWR) with the second device 920. Accordingly, the first device 910 and the second device 920 may obtain a ranging measurement result. As an embodiment, the ranging measurement result may include a distance (range) measurement result and/or an AoA measurement result. The distance measurement result may include distance information between the two devices based on a ToF obtained through TWR (e.g., DS-TWR or SS-TWR). The AoA measurement result may include AoA elevation information and/or AoA azimuth information obtained through TWR (e.g., DS-TWR or SS-TWR) or OWR (e.g., OWR for AoA measurement).
- Step 12120: The second device 920 may transmit menu ordering/payment information to the first device 910. The second device 920 may transmit the menu ordering/payment information through the OOB channel (e.g., a BLE channel) or the UWB channel.

As an embodiment, step 851 of FIG. 8 may be performed prior to step 12120. Steps 761, 770, and/or 780 of FIG. 7 may be performed prior to step 851.

As an embodiment, steps 861, 870, and/or 880 of FIG. 8 may be performed after step 12120.
- Step 12130: The first device 910 and the second device 920 may perform a UWB session stop procedure. Accordingly, the UWB session may be released. That is, the first device 910 and the second device 920 may be switched from the first state (e.g., the first state 1110 of FIG. 11) to the second state (e.g., the second state 1120 of FIG. 11).

### [An example of N:1 multiple connections]

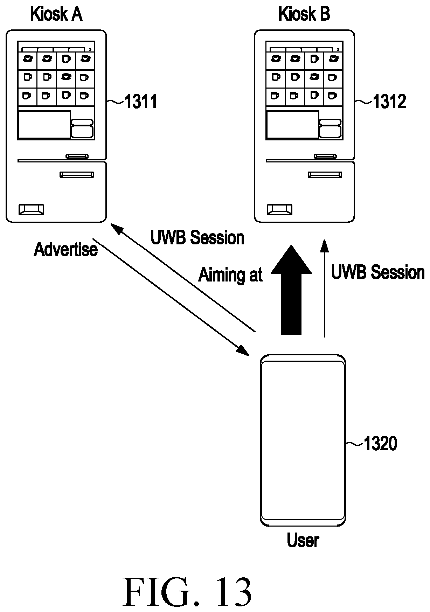

FIG. 13 illustrates an example of multiple connections according to an embodiment of the disclosure.

In an embodiment of FIG. 13, for convenience of explanation, it is assumed that a plurality of first devices 1311 and 1312 correspond to kiosks, a second device 1320 corresponds to an electronic device (user device) of a user using the kiosks, and multiple connections are established when one user device 1320 is connected to two kiosks 1311 and 1312, but the disclosure is not limited thereto. For example, one user device 1320 can also be connected to three or more kiosks. The first devices/kiosks 1311 and 1312 and the second device/user device 1320 correspond to UWB devices which support UWB communication.

In the embodiment of FIG. 13, it is assumed that only one kiosk 1311 among the plurality of kiosks 1311 and 1312 supports an advertising function.

Referring to FIG. 13, kiosk A 1311 may transmit or broadcast an advertisement message.

The user device 1320 having received the advertisement message may connect a UWB session with one of the plurality of kiosks 1311 and 1312, based on the advertisement message. For example, the user device 1320 may initially establish/connect a UWB session with the kiosk A 1312 having transmitted the advertisement message among the plurality of kiosks 1311 and 1312.

Meanwhile, when a UWB session connection (UWB connection) to a kiosk other than the initially connected kiosk is required, a method for moving a UWB connection is required. For example, when a UWB connection to another kiosk (e.g., kiosk B 1312) other than the initially connected kiosk A 1311 is required according to a movement of the user, a method for moving a UWB connection without intervention of the user device 1320 is required.

In the embodiment of FIG. 13, the kiosk A 1311 supporting an advertising function may provide a function (UWB connection determination function) for determining a movement of a UWB connection. For example, the kiosk A 1311 may identify a connection condition for the user device 1320 and then induce a UWB connection to the kiosk B 1312 having a better connection condition (migration).

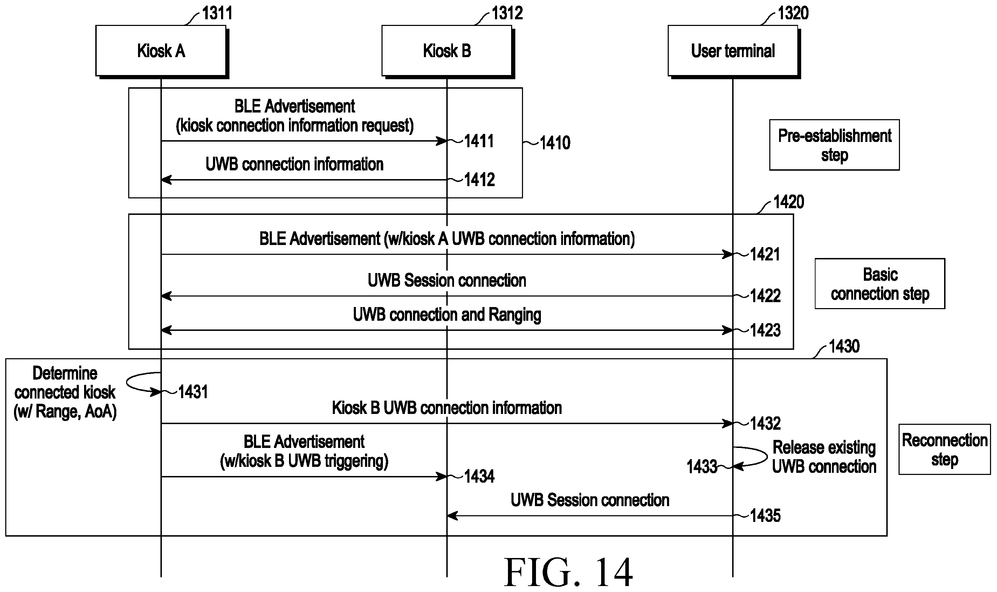

FIG. 14 illustrates an example of a procedure for moving a UWB session connection according to an embodiment of the disclosure.

Referring to FIG. 14, a procedure (UWB session connection movement procedure) for moving a UWB session connection may include a pre-establishment step 1410, a basic connection step 1420, and/or a reconnection step 1430.
(1) The pre-establishment step 1410 may be a step for registering/pre-connecting kiosk(s) which does not support an advertising function to a kiosk which supports an advertising function. The pre-establishment step 1410 may include at least one of the following operations.
   - Operation 1411: The kiosk A 1311 may transmit or broadcast a first advertisement message (e.g., a BLE advertisement message). As an embodiment, the first advertisement message may be used to request UWB connection information (kiosk connection information) for a kiosk. For example, the first advertisement message may include information for requesting the UWB connection information regarding the kiosk.
   - Operation 1412: The kiosk B 1312 may receive the first advertisement message and transmit UWB connection information regarding the kiosk B 1312 to the kiosk A 1311, based on the first advertisement message. The UWB connection information may include information required for a UWB connection (UWB session connection) with a corresponding electronic device. As an embodiment, the UWB connection information may include UWB configuration information (e.g., all or some of the UWB configuration parameters of Table 1) and/or UWB session information (e.g., all or some of the UWB session data parameters of Table 2), regarding the corresponding electronic device.
(2) The basic connection step 1420 may be a step for connecting a UWB session to a kiosk which supports an advertising function. The basic connection step 1420 may include at least one of the following operations.
   - Operation 1421: The kiosk A 1311 may transmit or broadcast a second advertisement message (e.g., a BLE advertisement message). As an embodiment, the second advertisement message may include UWB connection information regarding the kiosk A 1311.
   - Operation 1422: The user device 1320 may receive the second advertisement message and transmit a request for a UWB session connection to the kiosk A 1312 to the kiosk A 1311, based on the second advertisement message. For example, the user device 1320 may transmit the request for the UWB session connection to the kiosk A 1311 to the kiosk A 1311 by using the UWB connection information regarding the kiosk A 1311 in the second advertisement message.
   - Operation 1423: Based on the request of the user device 1320, a UWB session between the kiosk A 1311 and the user device 1320 may be connected/established.

As an embodiment, the user device 1320 may perform UWB ranging with the kiosk A 1311 through the established UWB session. The user device 1320 may perform OWR and/or TWR (e.g., DS-TWR or SS-TWR) with the kiosk A 1311. Accordingly, the user device 1320 and the kiosk A 1311 may obtain a ranging measurement result. As an embodiment, the ranging measurement result may include a distance (range) measurement result and/or an AoA measurement result. The distance measurement result may include distance information between the two devices based on a ToF obtained through TWR (e.g., DS-TWR or SS-TWR). The AoA measurement result may include AoA elevation information and/or AoA azimuth information obtained through TWR (e.g., DS-TWR or SS-TWR) or OWR (e.g., OWR for AoA measurement).

As an embodiment, the user device 1320 and the kiosk A 1311 may transfer data (e.g., service data) through an OOB channel or a UWB channel.

(3) The reconnection step 1430 may be a step for moving a UWB session connection to another kiosk. The reconnection step 1430 may include at least one of the following operations.
- Operation 1431 (connection kiosk determination): The kiosk A 1311 may determine whether a movement of a UWB session connection is necessary. As an embodiment, the kiosk A 1311 may use the ranging measurement result with the user device 1320 to determine whether a movement of a UWB session connection to another kiosk having a better connection condition and connected/registered with the kiosk A 1311 is necessary. For example, the kiosk A 1311 may use the distance measurement result and the AoA measurement result for the user device 1320 to determine whether a movement of a UWB session connection to the kiosk B 1312 is necessary. For example, when the kiosk A 1311 uses the distance measurement result for the user device 1320 to identify that the user device 1320 is located closer to the kiosk B 1312 than to the kiosk A 1311, and uses the AoA measurement result to identify that the user device 1320 is pointing to the kiosk B 1312, it may be determined that the movement of the UWB session connection to the kiosk B 1312 is necessary.
- Operation 1432: The kiosk A 1311 may transmit UWB connection information regarding another kiosk for a movement of a UWB session connection to the user device 1320. For example, when the movement of the UWB session connection to the kiosk B 1312 is necessary, the kiosk A 1311 may transmit the UWB connection information regarding the kiosk B 1312 to the user device 1320.
- Operation 1433: When the UWB connection information regarding another kiosk is received, the user device 1320 may release the existing UWB connection to the kiosk A 1311. For example, when the UWB connection information regarding the kiosk B 1312 is received, the user device 1320 may release the UWB connection to the kiosk A 1311.
- Operation 1434: The kiosk A 1311 may transmit or broadcast a third advertisement message (e.g., a BLE advertisement message) for triggering UWB for another kiosk. For example, the third advertisement message may include information for triggering UWB of the kiosk B 1312. Through the third advertisement message, the UWB of the kiosk B 1312 may be started. As an embodiment, operation 1434 may be performed prior to operation 1433.
- Operation 1435: The user device 1320 may transmit a request for a UWB session connection to a corresponding kiosk, based on the UWB connection information. For example, the user device 1320 may transmit the request for the UWB session connection to the kiosk B 1312, based on the UWB connection information regarding the kiosk B 1312. Based on the request of the user device 1320, a UWB session between the kiosk B 1312 and the user device 1320 may be connected/established. Afterwards, the user device 1320 may perform UWB ranging with the kiosk B 1312 through the established UWB session. In addition, the user device 1320 and the kiosk B 1312 may transfer data (e.g., service data) through the OOB channel or the UWB channel.

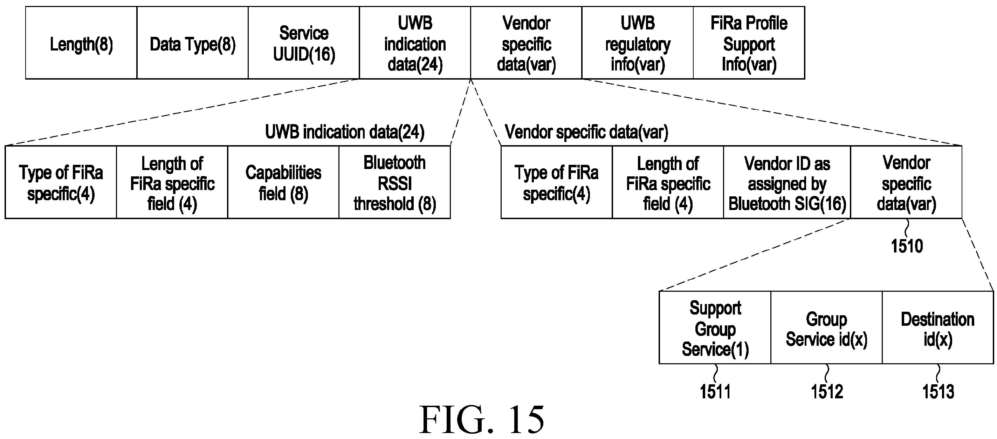

FIG. 15 illustrates an example of a BLE advertisement message according to an embodiment of the disclosure.

A BLE advertisement message of FIG. 15 may be used, for example, in the UWB session connection movement procedure of FIG. 14, but the disclosure is not limited thereto. For example, the BLE advertisement message of FIG. 15 may also be used in various procedures of the disclosure that require the use of the BLE advertisement message.

Referring to FIG. 15, the BLE advertisement message may include a length field, a data type field, a service UUID field, a UWB indication data field, a vendor specific data field, a UWB regulatory info field, and/or a FiRa profile support info field.

The UWB indication data field may include a field indicating the type of a FiRa specific field, a field indicating the length of a FiRa specific field, a capabilities field, and/or a field indicating a Bluetooth relative signal strength indication (RSSI) threshold.

The vendor specific data field may include a field indicating the type of a FiRa specific field, a field indicating the length of a FiRa specific field, a field indicating a vendor ID such as one assigned by a Bluetooth SIG, and/or a data field 1510 including vendor specific data.

As an embodiment, the vendor specific data field (or BLE advertisement message) may include a support group service field 1511, a group service ID field 1512, and/or a destination ID field 1513. For example, the support group service field 1511, the group service ID field 1512, and/or the destination ID field 1513 may be included in the data field 1510 within the vendor specific data field.

The support group service field 1511 may indicate whether a group service is supported. For example, the support group service field 1511 may be configured to one of a first value (e.g., 0) indicating that the group service is not supported or a second value (e.g., 1) indicating that the group service is supported.

The group service ID field 1512 may indicate an ID of the group service. The group service ID field 1512 may be used to determine whether multiple electronic devices (e.g., kiosks) provide the same service (group service). For example, the group service ID field 1512 may be used to determine whether multiple kiosks provide the same menu at the same store. For example, when a value of a group service ID field of the kiosk A 1311 and a value of a group service ID field of the kiosk B 1312 are the same, the two kiosks may be identified as providing the same service. Alternatively, when the value of the group service ID field of the kiosk A 1311 and the value of the group service ID field of the kiosk B 1312 are different from each other, the two kiosks may be identified as not providing the same service. In the disclosure, the group service ID field may also be referred to as a service group ID field.

The destination ID field 1513 may be used to provide identification information (e.g., an ID) of an electronic device (e.g., a kiosk) on which UWB is required to be triggered. As an embodiment, the destination ID field 1513 may be configured to a first value (e.g., 0x00) when the BLE advertisement message is an advertisement message without a purpose of UWB triggering (e.g., the advertisement message in step 1411 of FIG. 14), and may be configured to a second value (e.g., an ID of an electronic device on which UWB is to be triggered) when the BLE advertisement message is an advertisement message having a purpose of UWB triggering (e.g., the advertisement message in step 1434 of FIG. 14).

In the case of using the BLE advertisement message of FIG. 15, a function for registering a new kiosk and connecting a user device may be performed through one BLE advertisement message. For example, by using the BLE advertisement message of FIG. 15, a function for adding/registering a new kiosk through step 1410 of FIG. 14 and connecting a user device through step 1420 or step 1430 of FIG. 14 may be performed.

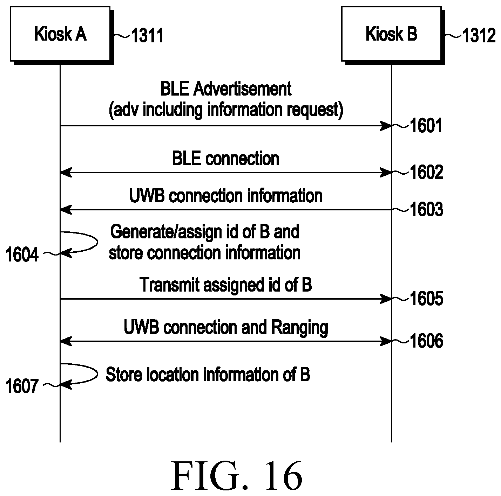

FIG. 16 may illustrate an example of a procedure for registering a kiosk according to an embodiment of the disclosure.

FIG. 16 may illustrate an example of step 1410 (pre-establishment procedure) of FIG. 14.

Referring to FIG. 16, a procedure for registering a kiosk may include at least one of the following steps.
- Step 1: The kiosk A 1311 may transmit or broadcast a BLE advertisement message (e.g., the BLE advertisement message of FIG. 15). The BLE advertisement message may be used to request information regarding other kiosk(s) (e.g., UWB connection information).
- Step 2: A BLE connection may be established between the kiosk A 1311 and the kiosk B 1312. As an embodiment, the kiosk B 1312 may receive the BLE advertisement message and establish a BLE connection with the kiosk A 1311, based on the BLE advertisement message.
- Step 3: The kiosk B 1312 may transmit UWB connection information regarding the kiosk B 1312 to the kiosk A 1311. As an embodiment, the kiosk B 1312 may transmit the UWB connection information through the BLE connection. For example, the kiosk B 1312 may transmit a BLE message (OOB message) including the UWB connection information to the kiosk A 1311. As an embodiment, the UWB connection information may include UWB configuration information (e.g., all or some of the UWB configuration parameters of Table 1) and/or UWB session information (e.g., all or some of the UWB session data parameters of Table 2), regarding the kiosk B 1312.
- Step 4: The kiosk A 1311 may generate/assign an ID of the kiosk B 1312 and map the UWB connection information regarding the kiosk B 1312 to the ID of kiosk B 1312 to store the mapped UWB connection information.
- Step 5: The kiosk A 1311 may transmit the generated/assigned ID of the kiosk B 1312 to the kiosk B 1312. As an embodiment, the kiosk A 1311 may transmit the ID of the kiosk B 1312 through the BLE connection. For example, the kiosk A 1311 may transmit a BLE message (OOB message) including the ID of the kiosk B 1312 to the kiosk B 1312.
- Step 6: A UWB session between the kiosk A 1311 and the kiosk B 1312 may be established. In addition, UWB ranging between the kiosk A 1311 and the kiosk B 1312 may be performed. For example, TWR may be performed between the kiosk A 1311 and the kiosk B 1312. Accordingly, distance information between the kiosk A 1311 and the kiosk B 1312 may be obtained.
- Step 7: The kiosk A 1311 may store location information of the kiosk B 1312. As an embodiment, the kiosk A 1311 may obtain the location information of the kiosk B 1312, based on the distance information obtained through TWR with the kiosk B 1312.

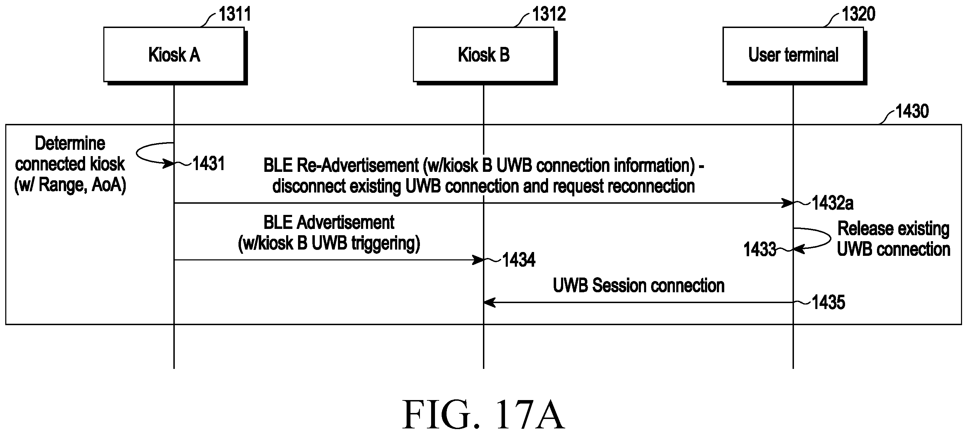

FIG. 17A illustrates an example of a procedure for moving a UWB session connection according to an embodiment of the disclosure.

FIG. 17A may illustrate an example of step 1430 (reconnection procedure) of FIG. 14.

Referring to FIG. 17A, a procedure for moving a UWB session connection may include at least one of the following operations.
- Operation 1431: Operation 1431 of FIG. 17A corresponds to the same operation as operation 1431 of FIG. 14, and the description of operation 1431 of FIG. 14 may be referred to.
- Operation 1432a: The kiosk A 1311 may transmit or broadcast a BLE advertisement message (BLE re-advertisement message) for releasing the existing UWB connection with the kiosk A 1311 and requesting a reconnection with the kiosk B 1312. The BLE advertisement message may include UWB connection information regarding the kiosk B 1312.
- Operation 1433: Operation 1433 of FIG. 17A corresponds to the same operation as operation 1433 of FIG. 14, and the description of operation 1433 of FIG. 14 may be referred to.
- Operation 1434: Operation 1434 of FIG. 17A corresponds to the same operation as operation 1434 of FIG. 14, and the description of operation 1434 of FIG. 14 may be referred to.
- Operation 1435: Operation 1435 of FIG. 17A corresponds to the same operation as operation 1435 of FIG. 14, and the description of operation 1435 of FIG. 14 may be referred to.

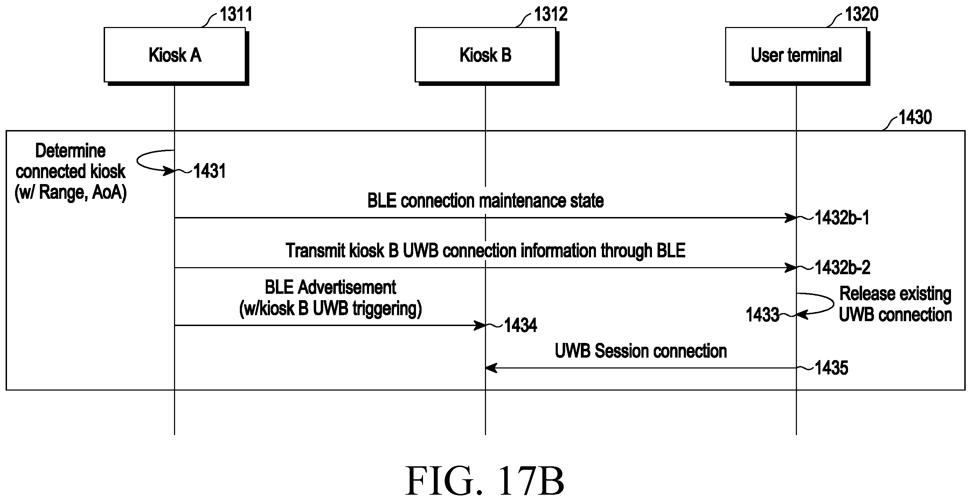

FIG. 17B illustrates another example of a procedure for moving a UWB session connection according to an embodiment of the disclosure.

FIG. 17B may illustrate another example of step 1430 (reconnection procedure) of FIG. 14.

Referring to FIG. 17B, a procedure for moving a UWB session connection may include at least one of the following operations.
- Operation 1431: Operation 1431 of FIG. 17A corresponds to the same operation as operation 1431 of FIG. 14, and the description of operation 1431 of FIG. 14 may be referred to.
- Operation 1432b-1: The kiosk A 1311 may identify that a BLE connection between the kiosk A 1311 and the user device 1320 is maintained.
- Operation 1432b-2: The kiosk A 1311 may transmit a BLE message (OOB message) for releasing the existing UWB connection with the kiosk A 1311 and requesting a reconnection with the kiosk B 1312 to the user device 1320 through the BLE connection. The BLE advertisement message may include UWB connection information regarding the kiosk B 1312.
- Operation 1433: Operation 1433 of FIG. 17B corresponds to the same operation as operation 1433 of FIG. 14, and the description of operation 1433 of FIG. 14 may be referred to.
- Operation 1434: Operation 1434 of FIG. 17B corresponds to the same operation as operation 1434 of FIG. 14, and the description of operation 1434 of FIG. 14 may be referred to.
- Operation 1435: Operation 1435 of FIG. 17B corresponds to the same operation as operation 1435 of FIG. 14, and the description of operation 1435 of FIG. 14 may be referred to.

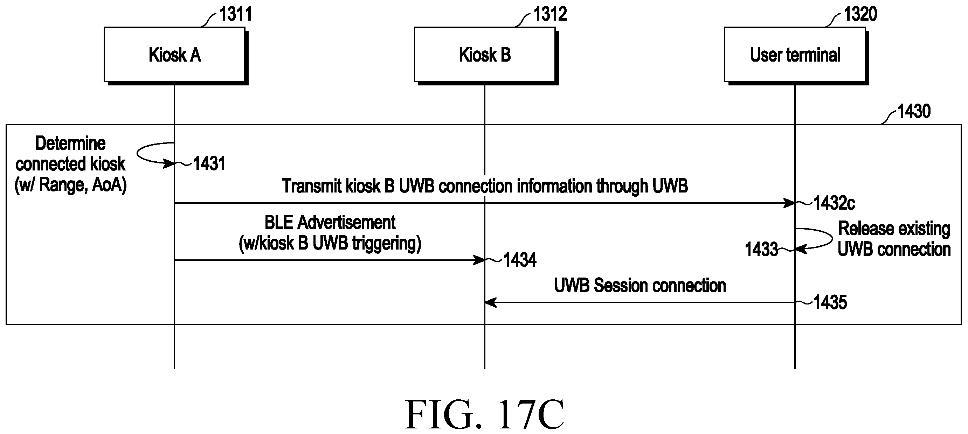

FIG. 17C illustrates yet another example of a procedure for moving a UWB session connection according to an embodiment of the disclosure.

FIG. 17C may illustrate yet another example of step 1430 (reconnection procedure) of FIG. 14.

Referring to FIG. 17C, a procedure for moving a UWB session connection may include at least one of the following operations.
- Operation 1431: Operation 1431 of FIG. 17A corresponds to the same operation as operation 1431 of FIG. 14, and the description of operation 1431 of FIG. 14 may be referred to.
- Operation 1432c: The kiosk A 1311 may transmit a UWB message for releasing the existing UWB connection with the kiosk A 1311 and requesting a reconnection with the kiosk B 1312 to the user device 1320 through a UWB connection. The UWB message may include UWB connection information regarding the kiosk B 1312.
- Operation 1433: Operation 1433 of FIG. 17B corresponds to the same operation as operation 1433 of FIG. 14, and the description of operation 1433 of FIG. 14 may be referred to.
- Operation 1434: Operation 1434 of FIG. 17B corresponds to the same operation as operation 1434 of FIG. 14, and the description of operation 1434 of FIG. 14 may be referred to.
- Operation 1435: Operation 1435 of FIG. 17B corresponds to the same operation as operation 1435 of FIG. 14, and the description of operation 1435 of FIG. 14 may be referred to.

### [Another example of N:1 multiple connections]

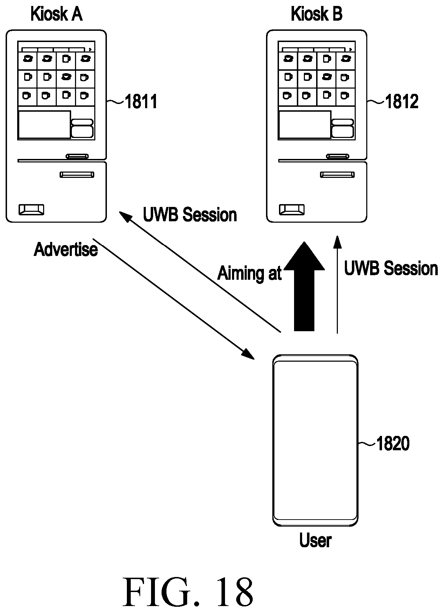

FIG. 18 illustrates another example of multiple connections according to an embodiment of the disclosure.

In an embodiment of FIG. 18, for convenience of explanation, it is assumed that a plurality of first devices 1811 and 1812 correspond to kiosks, a second device 1820 corresponds to an electronic device (user device) of a user using the kiosks, and multiple connections are established when one user device 1820 is connected to two kiosks 1811 and 1812, but the disclosure is not limited thereto. For example, one user device 1820 can also be connected to three or more kiosks. The first devices/kiosks 1811 and 1812 and the second device/user device 1820 correspond to UWB devices which support UWB communication.

In the embodiment of FIG. 18, as in the embodiment of FIG. 13, it is assumed that only one kiosk 1811 among the plurality of kiosks 1811 and 1812 supports an advertising function.

Referring to FIG. 18, kiosk A 1811 may transmit or broadcast an advertisement message.

The user device 1820 having received the advertisement message may connect a UWB session with one of the plurality of kiosks 1811 and 1812, based on the advertisement message. For example, the user device 1820 may initially establish/connect a UWB session with the kiosk A 1312 by aiming at the kiosk A 1312 among the plurality of kiosks 1811 and 1812.

Meanwhile, when a UWB session connection (UWB connection) to a kiosk other than the initially connected kiosk is required, a method for moving a UWB connection is required. For example, when a UWB connection to a kiosk other than the initially connected kiosk A 1311 is required according to a movement of the user, a method for moving a UWB connection is required.

In the embodiment of FIG. 18, unlike the embodiment of FIG. 13, the user device 1820 may provide a function (UWB connection determination function) for determining a movement of a UWB connection. For example, the user device 1820 may identify a connection condition for a kiosk and then induce a UWB connection to the kiosk B 1812 having a better connection condition (migration).

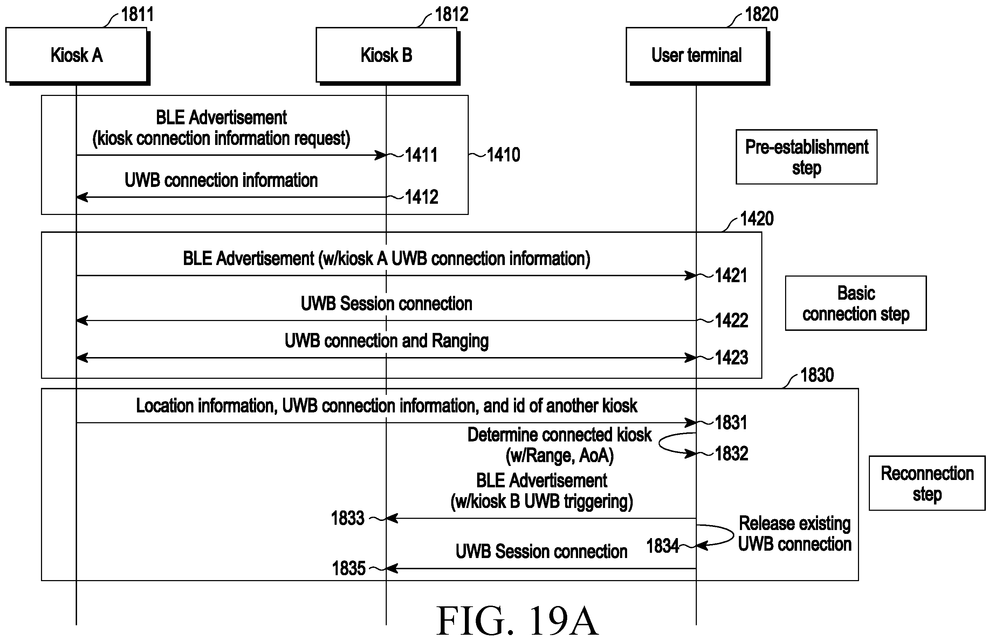

FIG. 19A illustrates an example of a procedure for moving a UWB session connection according to an embodiment of the disclosure.

Referring to FIG. 19A, a procedure (UWB session connection movement procedure) for moving a UWB session connection may include a pre-establishment step 1410, a basic connection step 1420, and/or a reconnection step 1830.
(1) The pre-establishment step 1410 of FIG. 19A is the same as the pre-establishment step 1410 of FIG. 14, and the description of the pre-establishment step 1410 of FIG. 14 may be referred to.
(2) The basic connection step 1420 of FIG. 19A is the same as the basic connection step 1420 of FIG. 14, and the description of the basic connection step 1420 of FIG. 14 may be referred to.
(3) The reconnection step 1830 may be a step for moving a UWB session connection to another kiosk. The reconnection step 1830 may include at least one of the following operations.
   - Operation 1831: The kiosk A 1811 may transmit, to the user device 1820, location information, UWB connection information, and ID information to another kiosk for a movement of a UWB session connection. For example, the kiosk A 1811 may transmit location information, UWB connection information, and ID information regarding the kiosk B 1812 to the user device 1820. As an embodiment, the UWB connection information may include UWB configuration information (e.g., all or some of the UWB configuration parameters of Table 1) and/or UWB session information (e.g., all or some of the UWB session data parameters of Table 2), regarding the kiosk B 1812.
   - Operation 1832 (connection kiosk determination): The user device 1820 may determine whether a movement of a UWB session connection is necessary. As an embodiment, the user device 1820 may use a ranging measurement result with the kiosk A 1811 to determine whether a movement of a UWB session connection to another kiosk having a better connection condition and connected/registered with the kiosk A 1811 is necessary. For example, the user device 1820 may use a distance measurement result and an AoA measurement result for the kiosk A 1811 to determine whether a movement of a UWB session connection to the kiosk B 1812 is necessary. For example, when the kiosk A 1811 uses a distance measurement result for the user device 1820 to identify that the user device 1820 is located closer to the kiosk B 1812 than to the kiosk A 1811, and uses an AoA measurement result to identify that the user device 1820 is pointing to the kiosk B 1812, it may be determined that the movement of the UWB session connection to the kiosk B 1812 is necessary.
   - Operation 1833: The user device 1820 may transmit an advertisement message for triggering UWB for another kiosk. For example, the user device 1820 may transmit or broadcast a BLE advertisement message (e.g., the BLE advertisement message of FIG. 15) including information for triggering UWB of the kiosk B 1812. Accordingly, the UWB of the kiosk B 1812 may be started.
   - Operation 1834: The user device 1820 may release the existing UWB connection to the kiosk A 1811. For example, when the user device 1820 determines that the movement of the UWB session connection to the kiosk B 1812 is necessary, the user device 1820 may release the UWB connection to the kiosk A 1811. As an embodiment, operation 1834 may be performed prior to operation 1833.
   - Operation 1835: The user device 1820 may transmit a request for a UWB session connection to a corresponding kiosk, based on the UWB connection information. For example, the user device 1820 may transmit the request for the UWB session connection to the kiosk B 1812, based on the UWB connection information regarding the kiosk B 1812. Based on the request of the user device 1820, a UWB session between the kiosk B 1812 and the user device 1820 may be connected/established. Afterwards, the user device 1820 may perform UWB ranging with the kiosk B 1812 through the established UWB session. In addition, the user device 1820 and the kiosk B 1812 may transfer data (e.g., service data) through an OOB channel or a UWB channel.

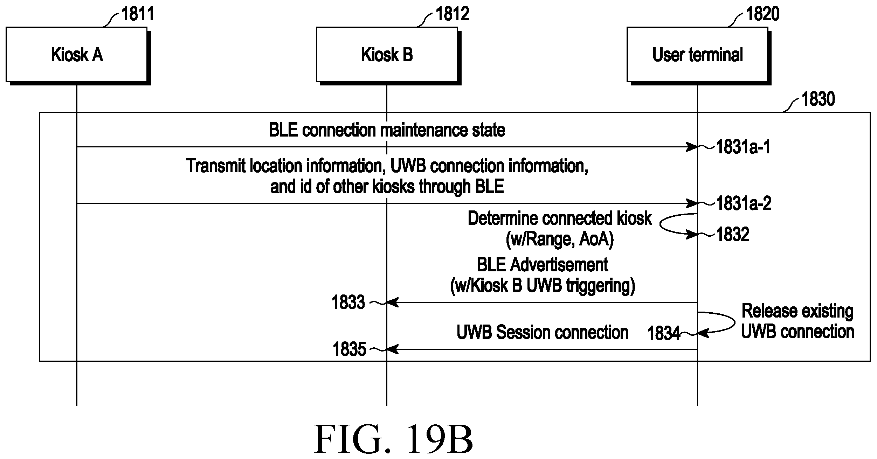

FIG. 19B illustrates an example of a procedure for moving a UWB session connection according to an embodiment of the disclosure.

FIG. 19B may illustrate another example of step 1830 (reconnection procedure) of FIG. 19A.

Referring to FIG. 19B, a procedure for moving a UWB session connection may include at least one of the following operations.
- Operation 1831a-1: The kiosk A 1811 may identify that a BLE connection between the kiosk A 1811 and the user device 1820 is maintained.
- Operation 1831a-1: The kiosk A 1811 may transmit location information, UWB connection information, and ID information regarding other kiosk(s) connected to the kiosk A 1811 to the user device 1820 through the BLE connection. For example, the kiosk A 1811 may transmit a BLE message (OOB message) including location information, UWB connection information, and ID information regarding the kiosk B 1812 to the user device 1820. As an embodiment, the UWB connection information may include UWB configuration information (e.g., all or some of the UWB configuration parameters of Table 1) and/or UWB session information (e.g., all or some of the UWB session data parameters of Table 2), regarding the kiosk B 1812.
- Operation 1832: Operation 1832 of FIG. 19B corresponds to the same operation as operation 1832 of FIG. 18, and the description of operation 1832 of FIG. 19A may be referred to.
- Operation 1833: Operation 1833 of FIG. 19B corresponds to the same operation as operation 1833 of FIG. 18, and the description of operation 1833 of FIG. 19A may be referred to.
- Operation 1834: Operation 1834 of FIG. 19B corresponds to the same operation as operation 1834 of FIG. 18, and the description of operation 1834 of FIG. 19A may be referred to.
- Operation 1835: Operation 1835 of FIG. 19B corresponds to the same operation as operation 1835 of FIG. 18, and the description of operation 1835 of FIG. 19A may be referred to.

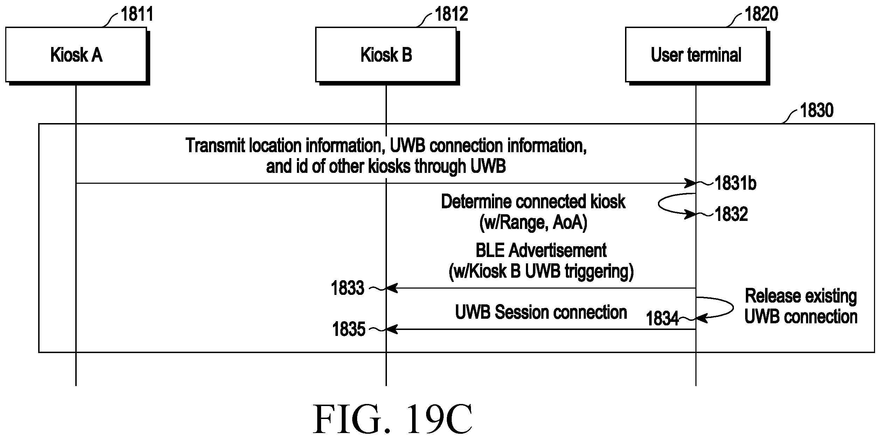

FIG. 19C illustrates another example of a procedure for moving a UWB session connection according to an embodiment of the disclosure.

FIG. 19C may illustrate yet another example of step 1830 (reconnection procedure) of FIG. 19A.

Referring to FIG. 19C, a procedure for moving a UWB session connection may include at least one of the following operations.
- Operation 1831b: The kiosk A 1811 may transmit location information, UWB connection information, and ID information regarding other kiosk(s) connected to the kiosk A 1811 to the user device 1820 through a UWB connection. For example, the kiosk A 1811 may transmit a UWB message including location information, UWB connection information, and ID information regarding the kiosk B 1812 to the user device 1820. As an embodiment, the UWB connection information may include UWB configuration information (e.g., all or some of the UWB configuration parameters of Table 1) and/or UWB session information (e.g., all or some of the UWB session data parameters of Table 2), regarding the kiosk B 1812.
- Operation 1832: Operation 1832 of FIG. 19C corresponds to the same operation as operation 1832 of FIG. 19A, and the description of operation 1832 of FIG. 19A may be referred to.
- Operation 1833: Operation 1833 of FIG. 19C corresponds to the same operation as operation 1833 of FIG. 19A, and the description of operation 1833 of FIG. 19A may be referred to.
- Operation 1834: Operation 1834 of FIG. 19C corresponds to the same operation as operation 1834 of FIG. 19A, and the description of operation 1834 of FIG. 19A may be referred to.
- Operation 1835: Operation 1835 of FIG. 19C corresponds to the same operation as operation 1835 of FIG. 19A, and the description of operation 1835 of FIG. 19A may be referred to.

### [Yet another example of N:1 multiple connections]

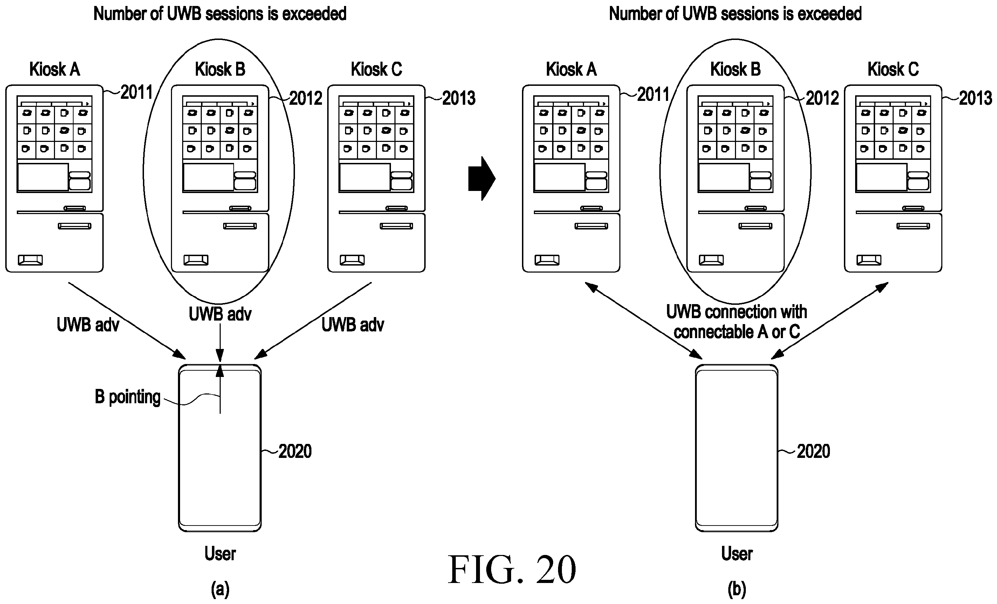

FIG. 20 illustrates an example of multiple connections according to an embodiment of the disclosure.

In an embodiment of FIG. 20, for convenience of explanation, it is assumed that a plurality of first devices 2011, 2012, and 2013 correspond to kiosks, a second device 2020 corresponds to an electronic device (user device) of a user using the kiosks, and multiple connections are established when one user device 2020 is connected to three kiosks 2011, 2012, and 2013, but the disclosure is not limited thereto. For example, one user device 2020 can also be connected to two or more kiosks. The first devices/kiosks 2011, 2012, and 2013 and the second device/user device 2020 correspond to UWB devices which support UWB communication.

In the embodiment of FIG. 20, it is assumed that all of the plurality of kiosks 2011, 2012, and 2013 support a UWB advertising function.

Referring to part (a) of FIG. 20, the plurality of kiosks 2011, 2012, and 2013 may transmit or broadcast a UWB advertisement message.

The user device 2020 having received the UWB advertisement message may connect a UWB session with one of the plurality of kiosks 2011, 2012, and 2013, based on the UWB advertisement message. For example, the user device 1820 may attempt to establish a UWB session with kiosk B 2012 by aiming at the kiosk B 2012 among the plurality of kiosks 2011, 2012, and 2013.

However, as illustrated in part (a) of FIG. 20, the number of UWB sessions of the kiosk B 2012 aimed at by the user device 2020 may be exceeded. In this case, the user device 2020 cannot perform a UWB session connection with the kiosk B 2012. As such, when the user device 2020 cannot connect a UWB session with a kiosk with which the user device 2020 intends/desires a UWB session connection, a method for inducing a UWB connection to another kiosk is required.

For example, as illustrated in part (b) of FIG. 20, a method for inducing a UWB connection to other kiosks 2011 and 2013, in which the number of UWB sessions is not exceeded, needs to be considered.

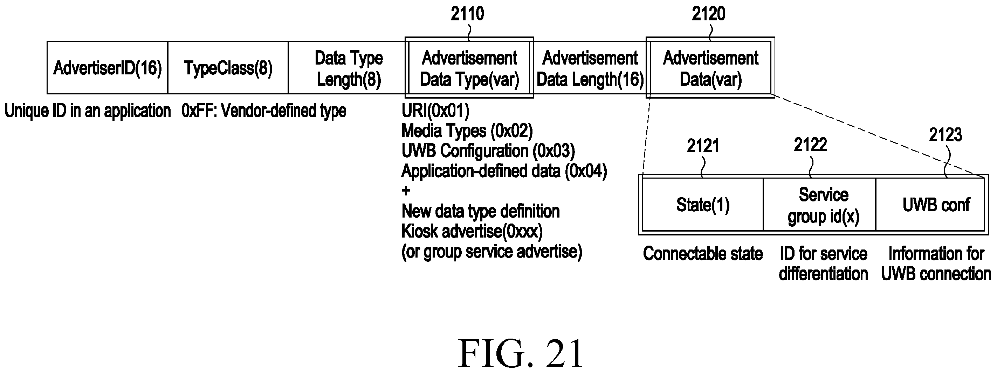

FIG. 21 illustrates an example of a UWB advertisement message according to an embodiment of the disclosure.

A UWB advertisement message of FIG. 21 may be used in various procedures of the disclosure that require the use of the UWB advertisement message.

Referring to FIG. 21, the UWB advertisement message may include an AdvertiserID field, a TypeClass field, a Data Type Length field, an Advertisement Data Type field, an Advertisement Data Length field, and/or an Advertisement Data field.

The AdvertiserID field may indicate an identifier (ID) of an application which provides a service.

The TypeClass field indicates a class of data included in the Advertisement Data field. The TypeClass field may be configured to one of a value (e.g., 0x01) indicating a URI, a value (e.g., 0x02) indicating a media type, a value (e.g., 0x03) indicating a UWB configuration, a value (e.g., 0x04) indicating Application-defined data, or a value (0xFF) indicating a Vendor-defined type.

The Data Type Length field indicates the length of the Advertisement Data Type field.

The Advertisement Data Type field indicates a detailed data type for a part defined in the TypeClass field. For example, when the TypeClass field is configured to a value (e.g., 0x01) indicating a URI, the Advertisement Data Type field may specify a detailed type (e.g., absolute URI, etc.) of the URI. When the TypeClass field is configured to a value (e.g., 0x02) indicating a media type, the Advertisement Data Type field may specify a detailed type (e.g., text, image, audio, etc.) of the media type. When the TypeClass field is configured to a value (e.g., 0x03) indicating a UWB configuration, the Advertisement Data Type field may specify a detailed type of the UWB configuration. When the TypeClass field is configured to a value (e.g., 0x04) indicating Application-defined data, the Advertisement Data Type field may specify a detailed type of the Application-defined data. When the TypeClass field is configured to a value (e.g., 0xFF) indicating a Vendor-defined type, the Advertisement Data Type field may specify a detailed type of the Vendor-defined type. For example, the Advertisement Data Type field may specify that a data type of the Vendor-defined type is a data type for a kiosk advertisement or a group service advertisement.

The Advertisement Data Length field indicates the length of the Advertisement Data field.

The Advertisement Data field includes data to be advertised. The Advertisement Data field may include a state field, a service group ID field, and/or a UWB configuration field. For example, when the Advertisement Data Type field specifies that the data type of the Vendor-defined type is a data type for a kiosk advertisement or a group service advertisement, the Advertisement Data field may include the state field, the service group ID field, and/or the UWB configuration field.

The state field may indicate whether an electronic device (e.g., a kiosk) which transmits a UWB advertisement message is in a UWB connectable state. As an embodiment, the state field may be configured to one of a first value (e.g., 0) indicating that the corresponding electronic device is in a non-connectable state or a second value (e.g., 1) indicating that the corresponding electronic device is in a connectable state.

The service group ID field may indicate a service group ID for a service provided by an electronic device (e.g., a kiosk) which transmits a UWB advertisement message. The service group ID field may be used to differentiate services. For example, when a value of a service group ID field of kiosk A and a value of a service group ID field of kiosk B are the same, the kiosks A and B may be identified as providing the same service. Alternatively, when the value of the service group ID field of the kiosk A and the value of the service group ID field of the kiosk B are different from each other, the kiosks A and B may be identified as not providing the same service.

UWB configuration information may include information (UWB connection information) for a UWB connection to an electronic device (e.g., a kiosk) which transmits a UWB advertisement message. As an embodiment, the UWB connection information may include UWB configuration information (e.g., all or some of the UWB configuration parameters of Table 1) and/or UWB session information (e.g., all or some of the UWB session data parameters of Table 2), regarding the corresponding electronic device.

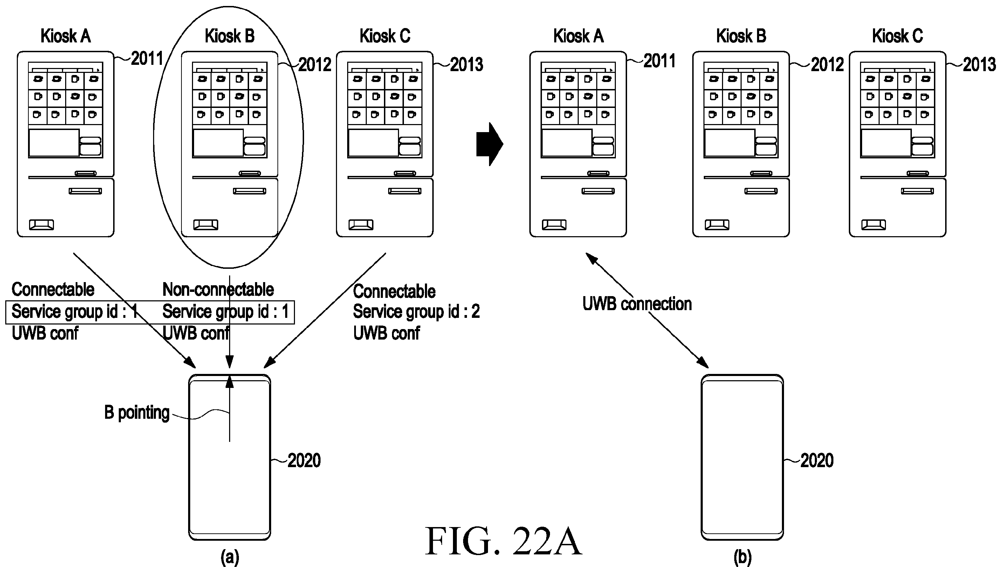

FIG. 22A illustrates an example of a UWB session connection procedure using a UWB advertisement message according to an embodiment of the disclosure.

A UWB advertisement message used in a procedure of FIG. 22A may be the UWB advertisement message of FIG. 21.

Referring to part (a) of FIG. 22A, kiosk A 2011 may transmit or broadcast a first UWB advertisement message including a state field configured to a value indicating that a UWB connection is possible, a service group ID field configured to a first value (e.g., 1), and a UWB configuration field including UWB connection information regarding the kiosk A 2011. Kiosk B 2012 may transmit or broadcast a second UWB advertisement message including a state field configured to a value indicating that a UWB connection is not possible, a service group ID field configured to the first value (e.g., 1), and a UWB configuration field including UWB connection information regarding the kiosk B 2012. Kiosk C 2013 may transmit or broadcast a third UWB advertisement message including a state field configured to a value indicating that a UWB connection is possible, a service group ID field configured to a second value (e.g., 2), and a UWB configuration field including UWB connection information regarding the kiosk C 2013.

The user device 2020 may receive the first UWB advertisement message, the second UWB advertisement message, and the third UWB advertisement message.

The user device 2020 which desires to connect a UWB session to the kiosk B 2012 may identify that a UWB connection to the kiosk B 2012 is not possible, based on the state field in the second UWB advertisement message for the kiosk B 2012.

In this case, the user device 2020 may use UWB advertisement message(s) to identify a kiosk which is capable of a UWB connection and provides the same service as a service provided by the kiosk B 2012. For example, the user device 2020 may use the state field in the first UWB advertisement message for the kiosk A 2011 to identify that a UWB connection to the kiosk A 2011 is possible, and may use the service group ID field in the first UWB advertisement message to identify that the kiosk A 2011 provides the same service as the service provided by the kiosk B 2012.

In this case, as illustrated in part (b) of FIG. 22A, the user device 2020 may establish a UWB connection to the kiosk A 2011 by using UWB configuration information in the first UWB advertisement message.

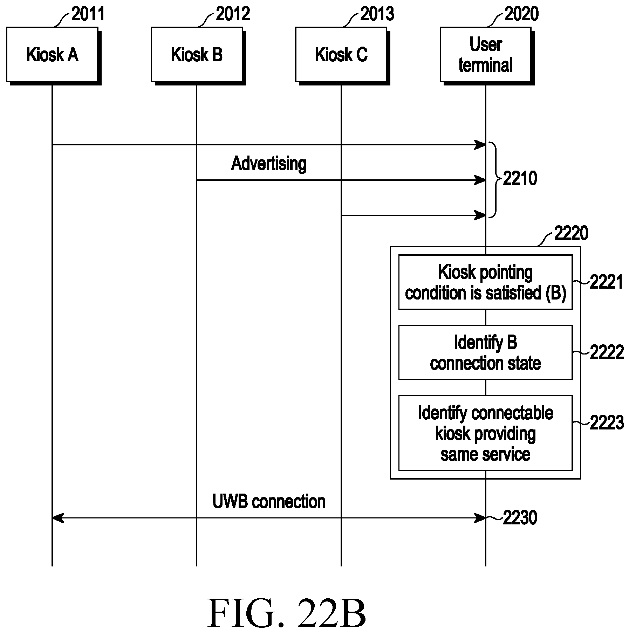

FIG. 22B is a flowchart illustrating a UWB session connection procedure using a UWB advertisement message according to an embodiment of the disclosure.

A UWB advertisement message used in a procedure of FIG. 22B may be the UWB advertisement message of FIG. 21.

In an embodiment of FIG. 22B, an example of a first UWB advertisement message of the kiosk A 2011, a second UWB advertisement message of the kiosk B 2012, and a third UWB advertisement message of the kiosk C 2013 may be as shown in FIG. 22A.

Referring to FIG. 22B, a UWB session connection procedure using a UWB advertisement message may include at least one of the following steps.
- Step 2210: Each of the kiosk A 2011, the kiosk B 2012, and the kiosk C 2013 may transmit or broadcast its own UWB advertisement message. The user device 2020 may receive each advertisement message.
- Step 2220: Step 2220 may be a UWB connection determination step by the user device 2020. Step 2220 may include at least one of the following operations.

Operation 2221: The user device 2020 may determine whether a pointing condition for one (e.g., the kiosk B 2012) of a plurality of kiosks is satisfied. For example, the user device 2020 may determine whether the pointing condition for the kiosk B 2012 aimed at by a user is satisfied. As an embodiment, the user device 2020 may determine whether the pointing condition for the kiosk B 2012 aimed at by the user is satisfied, by using an AoA measurement result for the UWB advertisement message of the kiosk B 2012. For example, when an AoA value for the UWB advertisement message of the kiosk B 2012 is within a preconfigured angle or angle range (e.g., an AoA azimuth is within a range of -5° to +5°), the user device 2020 may determine that the pointing condition for the kiosk B 2012 is satisfied. Accordingly, the user's intention to use a service provided by the kiosk B 2012 may be identified.

Operation 2222: The user device 2020 may identify a UWB connection state for a kiosk (e.g., the kiosk B 2012) in which a pointing condition is satisfied. As an embodiment, the user device 2020 may identify a UWB connection state for the corresponding kiosk, based on a value of a state field in the UWB advertisement message for the corresponding kiosk. For example, when the second UWB advertisement message for the kiosk B 2012 is as shown in FIG. 22A, the user device 2020 may identify that a UWB connection to the kiosk B 2012 is not possible.

Operation 2223: The user device 2020 may identify kiosk(s) which provide the same service as the kiosk (e.g., the kiosk B 2012) in which the pointing condition is satisfied, and are in a state in which a UWB connection is possible. As an embodiment, the user device 2020 may identify kiosk(s) which provide the same service as the kiosk in which the pointing condition is satisfied, and are in a state in which a UWB connection is possible, by using a state field and a service group ID field of each UWB advertisement message. For example, when the first UWB advertisement message, the second UWB advertisement message, and the third UWB advertisement message are as shown in FIG. 22A, the user device 2020 may identify that the kiosk A 2011 is a kiosk which provides the same service as the kiosk B 2012 and is capable of a UWB connection.
- Step 2230: The user device 2020 may establish a UWB connection with an identified kiosk (connected kiosk) (e.g., the kiosk A 2011).

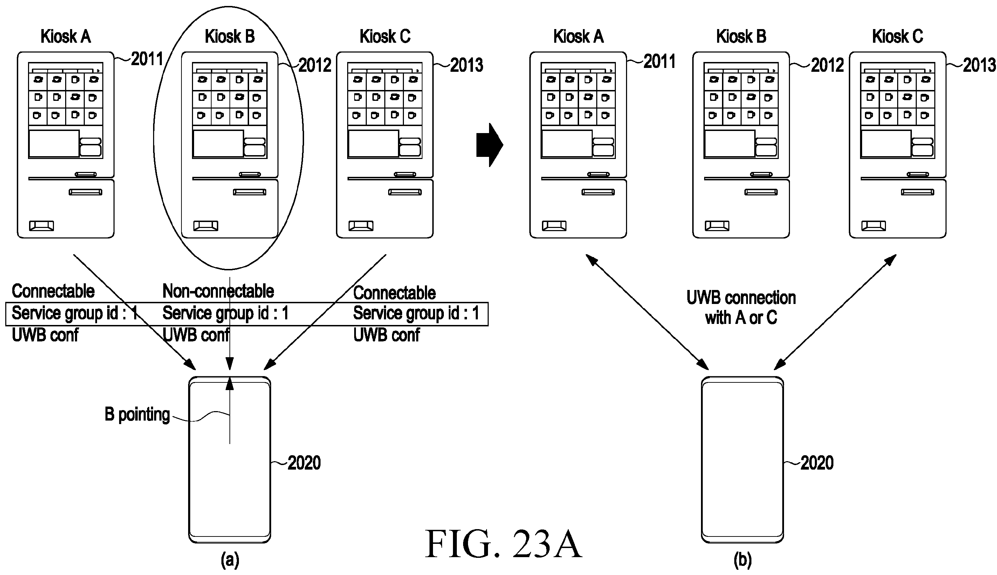

FIG. 23A illustrates another example of a UWB session connection procedure using a UWB advertisement message according to an embodiment of the disclosure.

A UWB advertisement message used in a procedure of FIG. 23A may be the UWB advertisement message of FIG. 21.

Referring to part (a) of FIG. 23A, the kiosk A 2011 may transmit or broadcast a first UWB advertisement message including a state field configured to a value indicating that a UWB connection is possible, a service group ID field configured to a first value (e.g., 1), and a UWB configuration field including UWB connection information regarding the kiosk A 2011. The kiosk B 2012 may transmit or broadcast a second UWB advertisement message including a state field configured to a value indicating that a UWB connection is not possible, a service group ID field configured to the first value (e.g., 1), and a UWB configuration field including UWB connection information regarding the kiosk B 2012. The kiosk C 2013 may transmit or broadcast a third UWB advertisement message including a state field configured to a value indicating that a UWB connection is possible, a service group ID field configured to the first value (e.g., 1), and a UWB configuration field including UWB connection information regarding the kiosk C 2013.

The user device 2020 may receive the first UWB advertisement message, the second UWB advertisement message, and the third UWB advertisement message.

The user device 2020 which desires to connect a UWB session to the kiosk B 2012 may identify that a UWB connection to the kiosk B 2012 is not possible, based on the state field in the second UWB advertisement message for the kiosk B 2012.

In this case, the user device 2020 may use UWB advertisement message(s) to identify a kiosk which is capable of a UWB connection and provides the same service as a service provided by the kiosk B 2012. For example, the user device 2020 may use the state field in the first UWB advertisement message for the kiosk A 2011 to identify that a UWB connection to the kiosk A 2011 is possible, and may use the service group ID field in the first UWB advertisement message to identify that the kiosk A 2011 provides the same service as the service provided by the kiosk B 2012. In addition, the user device 2020 may use the state field in the third UWB advertisement message for the kiosk C 2013 to identify that a UWB connection to the kiosk C 2013 is possible, and may use the service group ID field in the third UWB advertisement message to identify that the kiosk C 2011 provides the same service as the service provided by the kiosk B 2012.

In this case, as illustrated in part (b) of FIG. 23A, the user device 2020 may establish a UWB connection to the kiosk A 2011 by using UWB configuration information in the first UWB advertisement message, or establish a UWB connection to the kiosk C 2013 by using UWB configuration information in the third UWB advertisement message. As an embodiment, the user device 2020 may establish a UWB connection with a kiosk among the kiosk A 2011 and the kiosk C 2013, based on RSSI.

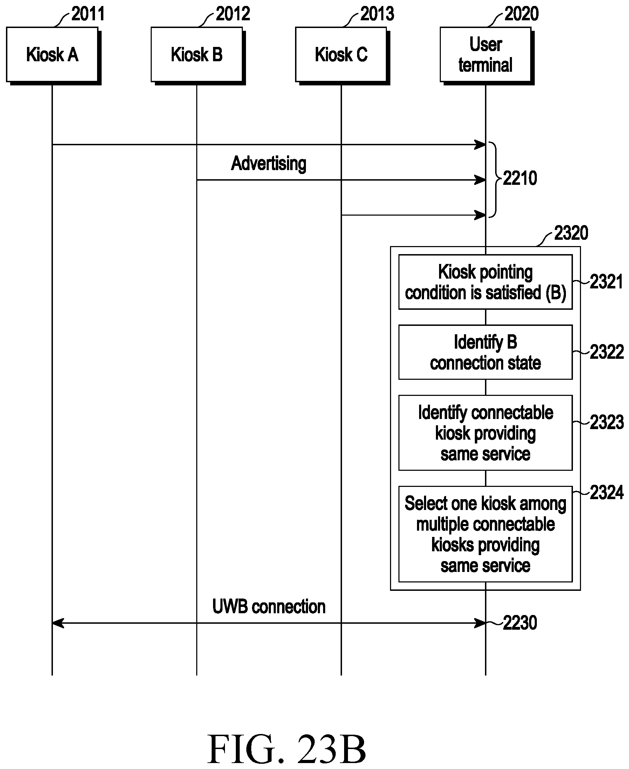

FIG. 23B is a flowchart illustrating a UWB session connection procedure using a UWB advertisement message according to an embodiment of the disclosure.

A UWB advertisement message used in a procedure of FIG. 23B may be the UWB advertisement message of FIG. 21.

In an embodiment of FIG. 23B, an example of a first UWB advertisement message of the kiosk A 2011, a second UWB advertisement message of the kiosk B 2012, and a third UWB advertisement message of the kiosk C 2013 may be as shown in FIG.23A.

Referring to FIG. 23B, a UWB session connection procedure using a UWB advertisement message may include at least one of the following steps.
- Step 2210: Step 2210 of FIG. 23B is the same as step 2210 of FIG. 22B, and the description of step 2210 of FIG. 22B may be referred to.
- Step 2320: Step 2320 may be a UWB connection determination step by the user device 2020. Step 2320 may include at least one of the following operations.

Operation 2321: The user device 2020 may determine whether a pointing condition for one (e.g., the kiosk B 2012) of a plurality of kiosks is satisfied. For example, the user device 2020 may determine whether the pointing condition for the kiosk B 2012 aimed at by a user is satisfied. As an embodiment, the user device 2020 may determine whether the pointing condition for the kiosk B 2012 aimed at by the user is satisfied, by using an AoA measurement result for the UWB advertisement message of the kiosk B 2012. For example, when an AoA value for the UWB advertisement message of the kiosk B 2012 is within a preconfigured angle or angle range (e.g., an AoA azimuth is within a range of -5° to +5°), the user device 2020 may determine that the pointing condition for the kiosk B 2012 is satisfied. Accordingly, the user's intention to use a service provided by the kiosk B 2012 may be identified.

Operation 2322: The user device 2020 may identify a UWB connection state for a kiosk (e.g., the kiosk B 2012) in which a pointing condition is satisfied. As an embodiment, the user device 2020 may identify a UWB connection state for the corresponding kiosk, based on a value of a state field in the UWB advertisement message for the corresponding kiosk. For example, when the second UWB advertisement message for the kiosk B 2012 is as shown in FIG. 23A, the user device 2020 may identify that a UWB connection to the kiosk B 2012 is not possible.

Operation 2323: The user device 2020 may identify kiosk(s) which provide the same service as the kiosk (e.g., the kiosk B 2012) in which the pointing condition is satisfied, and are in a state in which a UWB connection is possible. As an embodiment, the user device 2020 may identify kiosk(s) which provide the same service as the kiosk in which the pointing condition is satisfied, and are in a state in which a UWB connection is possible, by using a state field and a service group ID field of each UWB advertisement message. For example, when the first UWB advertisement message, the second UWB advertisement message, and the third UWB advertisement message are as shown in FIG. 22A, the user device 2020 may identify that the kiosk A 2011 and the kiosk C 2013 are kiosks which provides the same service as the kiosk B 2012 and are capable of a UWB connection.

Operation 2324: When the plurality of kiosks (e.g., the kiosk A 2011 and the kiosk C 2013) are identified, the user device 2020 may determine one of the plurality of kiosks as a connected kiosk by using a preconfigured condition. As an embodiment, the user device 2020 may determine a kiosk having the highest RSSI among the plurality of kiosks as the connected kiosk.
- Step 2230: Step 2230 of FIG. 23B is the same as step 2230 of FIG. 22B, and the description of step 2230 of FIG. 22B may be referred to.

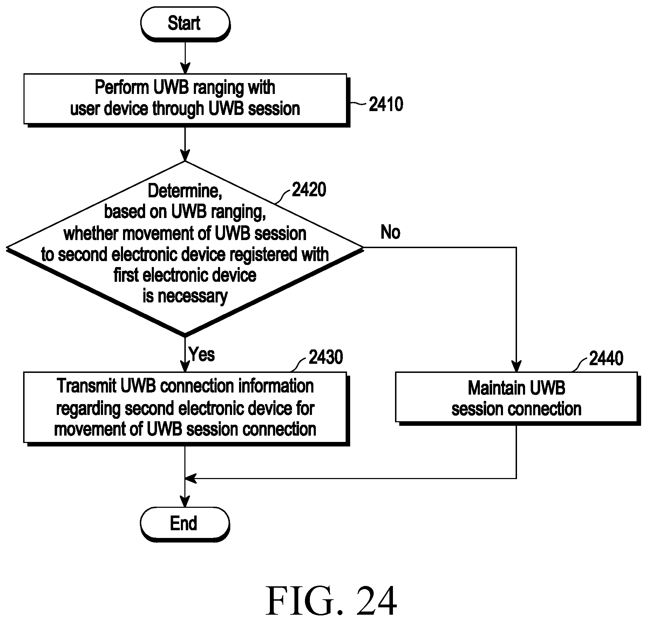

FIG. 24 illustrates a method for moving a UWB session connection by a first electronic device according to an embodiment of the disclosure.

A first electronic device of FIG. 24 may be an electronic device (e.g., a kiosk) which supports an advertising function.

Referring to FIG. 24, the first electronic device may perform UWB ranging with a user device through a UWB session (2410).

The first electronic device may determine, based on the UWB ranging, whether a movement of the UWB session to a second electronic device registered with the first electronic device is necessary (2420).

When it is determined that the movement of the UWB session to the second electronic device is necessary, the first electronic device may transmit UWB connection information regarding the second electronic device (2430).

When it is determined that the movement of the UWB session to the second electronic device is not necessary, the first electronic device may maintain the UWB session with the user device (2440).

As an embodiment, the UWB connection information may be used to connect a UWB session between the user device and the second electronic device.

As an embodiment, the UWB connection information may be transmitted through one of a BLE advertisement message, a BLE message, or a UWB message.

As an embodiment, the first electronic device may transmit an advertisement message including first information for UWB triggering of the second electronic device.

As an embodiment, the advertisement message may further include second information indicating whether a group service is supported and third information indicating an ID of the group service.

As an embodiment, the advertisement message is the BLE advertisement message, and the first information, the second information, and the third information may be included in a vendor specific data field within the BLE advertisement message.

As an embodiment, the determining of whether the movement of the UWB session to the second electronic device is necessary may include determining, based on distance information and angle information acquired through the UWB ranging, whether the movement of the UWB session to the second electronic device is necessary.

As an embodiment, the first electronic device may register the second electronic device with the first electronic device. The registering may include acquiring the UWB connection information regarding the second electronic device.

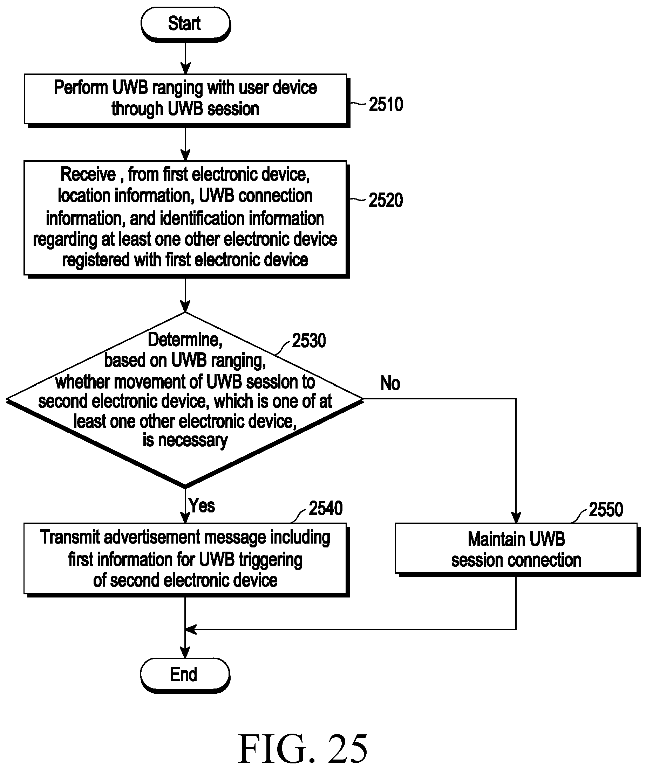

FIG. 25 illustrates a method for moving a UWB session connection by a user device according to an embodiment of the disclosure.

A first electronic device of FIG. 25 may be an electronic device (e.g., a kiosk) which supports an advertising function.

Referring to FIG. 25, a user device may perform UWB ranging with the first electronic device through a UWB session (2510).

The user device may receive, from the first electronic device, location information, UWB connection information, and identification information regarding at least one other electronic device registered with the first electronic device (2520).

The user device may determine, based on the UWB ranging, whether a movement of the UWB session to a second electronic device, which is one of the at least one other electronic device, is necessary (2530).

When it is determined that the movement of the UWB session to the second electronic device is necessary, the user device may transmit an advertisement message including first information for UWB triggering of the second electronic device (2540).

When it is determined that the movement of the UWB session to the second electronic device is not necessary, the user device may maintain the UWB session with the user device (2550).

As an embodiment, the location information, the UWB connection information, and the identification information may be transmitted through one of a BLE advertisement message, a BLE message, or a UWB message.

As an embodiment, the advertisement message may further include second information indicating whether a group service is supported and third information indicating an ID of the group service.

As an embodiment, the advertisement message is the BLE advertisement message, and the first information, the second information, and the third information may be included in a vendor specific data field within the BLE advertisement message.

As an embodiment, the determining of whether the movement of the UWB session to the second electronic device is necessary may include determining, based on distance information and angle information acquired through the UWB ranging, whether the movement of the UWB session to the second electronic device is necessary.

As an embodiment, the first electronic device may register the second electronic device with the first electronic device. The registering may include acquiring UWB connection information regarding the second electronic device.

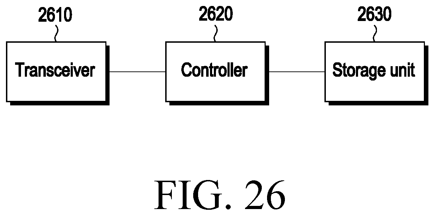

FIG. 26 illustrates a configuration of a UWB device according to an embodiment of the disclosure.

Referring to FIG. 26, an electronic device may include a transceiver 2610, a controller 2620, and a storage unit 2630. In the disclosure, the controller may be defined as a circuit, an application-specific integrated circuit, or at least one processor.

The transceiver 2610 may transmit or receive a signal to or from other entities. For example, the transceiver 2610 may transmit or receive data for UWB ranging.

The controller 2620 may control the overall operation of the electronic device according to the embodiment proposed in the disclosure. For example, the controller 2620 may control a signal flow between blocks so as to perform the operation according to the above-described flowchart. Specifically, for example, the controller 2620 may control the operation of the UWB device described with reference to FIGS. 1 to 25.

The storage unit 2630 may store at least one of information transmitted or received through the transceiver 2610 and information generated through the controller 2620. For example, the storage unit 2630 may store information necessary to establish/move a UWB session, as described with reference to FIGS. 1 to 25.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method of a first electronic device performing UWB communication, the method comprising:
performing UWB ranging with a user device through a UWB session;
determining, based on the UWB ranging, whether a movement of the UWB session to a second electronic device registered with the first electronic device is necessary; and
in case that it is determined that the movement of the UWB session to the second electronic device is necessary, transmitting UWB connection information regarding the second electronic device,
wherein the UWB connection information is used to connect a UWB session between the user device and the second electronic device.

2. The method of claim 1, wherein the UWB connection information is transmitted through one of a BLE advertisement message, a BLE message, or a UWB message.

3. The method of claim 1, wherein the method further comprises transmitting an advertisement message comprising first information for UWB triggering of the second electronic device.

4. The method of claim 2, wherein the advertisement message further comprises second information indicating whether a group service is supported and third information indicating an ID of the group service.

5. The method of claim 4, wherein the advertisement message is the BLE advertisement message, and the first information, the second information, and the third information are included in a vendor specific data field within the BLE advertisement message.

6. The method of claim 1, wherein the determining of whether the movement of the UWB session to the second electronic device is necessary comprises determining, based on distance information and angle information acquired through the UWB ranging, whether the movement of the UWB session to the second electronic device is necessary.

7. The method of claim 1, wherein the method further comprises registering the second electronic device with the first electronic device, and
wherein the registering comprises acquiring the UWB connection information regarding the second electronic device.

8. A method of a user device performing UWB communication, the method comprising:
performing UWB ranging with a first electronic device through a UWB session;
receiving, from the first electronic device, location information, UWB connection information, and identification information regarding at least one other electronic device registered with the first electronic device;
determining, based on the UWB ranging, whether a movement of the UWB session to a second electronic device, which is one of the at least one other electronic device, is necessary; and
in case that it is determined that the movement of the UWB session to the second electronic device is necessary, transmitting an advertisement message comprising first information for UWB triggering of the second electronic device.

9. The method of claim 8, wherein the location information, the UWB connection information, and the identification information are transmitted through one of a BLE advertisement message, a BLE message, or a UWB message.

10. The method of claim 8, wherein the advertisement message further comprises second information indicating whether a group service is supported and third information indicating an ID of the group service.

11. The method of claim 10, wherein the advertisement message is a BLE advertisement message, and the first information, the second information, and the third information are included in a vendor specific data field within the BLE advertisement message.

12. The method of claim 8, wherein the determining of whether the movement of the UWB session to the second electronic device is necessary comprises determining, based on distance information and angle information acquired through the UWB ranging, whether the movement of the UWB session to the second electronic device is necessary.

13. The method of claim 8, wherein the method further comprises registering the second electronic device with the first electronic device, and
wherein the registering comprises acquiring UWB connection information regarding the second electronic device.

14. A first electronic device performing UWB communication, the first electronic device comprising:
memory; and
a processor connected to the memory,
wherein the processor is configured to:
perform UWB ranging with a user device through a UWB session;
determine, based on the UWB ranging, whether a movement of a UWB session to a second electronic device registered with the first electronic device is necessary; and
in case that it is determined that the movement of the UWB session to the second electronic device is necessary, transmit UWB connection information regarding the second electronic device, and
wherein the UWB connection information is used to connect a UWB session between the user device and the second electronic device.

15. A user device performing UWB communication, the user device comprising:
memory; and
a processor connected to the memory,
wherein the processor is configured to:
perform UWB ranging with a first electronic device through a UWB session;
receive, from the first electronic device, location information, UWB connection information, and identification information regarding at least one other electronic device registered with the first electronic device;
determine, based on the UWB ranging, whether a movement of the UWB session to a second electronic device, which is one of the at least one other electronic device, is necessary; and
transmit an advertisement message comprising first information for UWB triggering of the second electronic device.
